# EUROPEAN PATENT SPECIFICATION

(11) **EP 0 990 788 B1**
(45) Date of publication and mention of the grant of the patent: **29.01.2003**
(21) Application number: 99119028.1
(22) Date of filing: 29.09.1999
(51) Int. Cl.: F02D 41/40, F02D 21/08, F02D 41/02, F02D 43/00

(54) **Exhaust gas purifying system for diesel engine**
Abgasreinigungssystem für eine Brennkraftmaschine
Système de purification de gaz d'échappement d' un moteur

(30) Priority: 29.09.1998 JP 27496298; 16.12.1998 JP 35727498
(43) Date of publication of application: 05.04.2000
(73) Proprietor: Mazda Motor Corporation, Aki-gun, Hiroshima 730-8670 (JP)
(72) Inventor: Terazawa, Yasuyuki, Fuchu-cho, Aki-gun, Hiroshima 730-8670 (JP); Kagawa, Ryoji, Fuchu-cho, Aki-gun, Hiroshima 730-8670 (JP); Watanabe, Tomomi, Fuchu-cho, Aki-gun, Hiroshima 730-8670 (JP); Hayashibara, Hiroshi, Fuchu-cho, Aki-gun, Hiroshima 730-8670 (JP); Saito, Tomoaki, Fuchu-cho, Aki-gun, Hiroshima 730-8670 (JP); Hosoya, Hideki, Fuchu-cho, Aki-gun, Hiroshima 730-8670 (JP); Yasutomi, Katsuaki, Fuchu-cho, Aki-gun, Hiroshima 730-8670 (JP)
(74) Representative: Müller-Boré & Partner Patentanwälte

(56) References cited:
- EP-A- 0 732 485
- EP-A- 0 767 303
- EP-A- 0 844 380
- WO-A-96/03578

## Description

The present invention relates to an exhaust gas purifying system for an engine, and, more particularly, to an exhaust gas purifying system equipped with a fuel injection control feature suitably installed to a cylinder injection-spark ignition type of diesel engine.

Typically, three-way catalysts are known as a catalytic converter that simultaneously and quite effectively lowers levels of HC, CO and NOx emissions in an exhaust gas from an internal combustion engine to purify the exhaust gas at an approximately stoichiometric air-to-fuel ratio. In gasoline engines, this three-way catalytic converter is used and, at the same time, fuel injection control is generally made to control an air-to-fuel ratio around the stoichiometric air-to-fuel ratio in most of the operation regions except for a full-load region and such. However, a diesel engine's air-to-fuel ratio is set to be in an extremely lean state (for instance, A/F ≥ 18) in any usual operation regions, so the three-way catalytic converter cannot be used. Furthermore, when the air-to-fuel ratio is in the lean state, oxygen content in an exhaust gas becomes extremely high, so that it is difficult to reduce NOx emissions sufficiently in such an atmosphere and purify the exhaust gas.

Accordingly, there is a technology that uses a so-called NOx absorbent that absorbs NOx emissions in an excessively oxygen concentrated atmosphere with more than a predetermined content (for instance, 4 %) of oxygen in an exhaust gas and releases the absorbed NOx emissions when the oxygen content decreases. However, it is necessary to carry out so-called refreshing that is referred to releasing the absorbed NOx emissions before the absorption capacity declines, since this NOx absorbent has a lower absorption capacity due to an increase in the absorbed amount of NOx emissions. In an exhaust gas purifying system for a diesel engine disclosed in e.g., Japanese Unexamined Patent Publication No. 6 - 212961, unburnt fuel (gas oil) is supplied to an exhaust gas as a reducing agent when the above-noted refreshing is must be carried out, and the oxygen content of the exhaust gas is lowered due to the consumption of oxygen by the reducing agent. In other words, in this case, a small amount of fuel is injected from a mid-expansion stroke of a cylinder to an exhaust stroke, in addition to a normal fuel injection process. This fuel is activated by a high-temperature burnt gas in a combustion chamber and strong reducing properties are then added, thus releasing NOx emissions from the NOx absorbent and sufficiently reducing the NOx emissions to purify the exhaust gas.

In order to control generation of NOx emissions accompanying combustion of fuel, the peak of combustion gas temperature in the combustion chamber is generally lowered by recirculating partly the exhaust gas to the combustion chamber through an exhaust gas recirculation passage which mutually connects the intake and exhaust systems of an engine. However, in such the case where the exhaust gas is recirculated, as fuel injection is carried out from the mid-expansion stroke to the exhaust stroke as in the prior art systems mentioned above, a large amount of fuel that is delivered is recirculated into the combustion chamber in the unburnt state, thus causing various problems. In order to prevent these problems, in an exhaust gas purifying system for the gasoline engine disclosed in e.g., Japanese Unexamined Patent Publication No. 8- 200045, a large amount of unburnt fuel is prevented from being recirculated by closing the exhaust gas recirculation passage when fuel injection is carried out for refreshing the NOx absorbent particularly in the low-, mid-load operation regions of the engine where a large amount of exhaust gas is admitted. Moreover, in an exhaust gas purifying system for a diesel engine disclosed in e.g., Japanese Unexamined Patent Publication No. 7- 279718, in contrast to the above-mentioned two prior art systems, an average air-to-fuel ratio in the combustion chamber is periodically switched to be in a rich state for refreshing the NOx absorbent and, at this time, by reducing the amount of intake air introduced into the combustion chamber and increasing the amount of fuel injection by a complementary amount, fluctuations of engine output which are caused due to the decrease in the amount of intake air are controlled.

However, in the case of the first two prior art systems described in Japanese Unexamined Patent Publication Nos. 6 - 212961 and 8 - 200045), fuel is injected after the mid-expansion stroke for refreshing the NOx absorbent, and most of the fuel is unburnt and discharged from the combustion chamber, so that the deterioration of fuel consumption is serious. In case of the third prior art system described in Japanese Unexamined Patent Publication No. 7 - 279718, fuel is periodically burnt with an approximately stoichiometric air-to-fuel ratio although which is temporarily, so that a large amount of smoke is likely to generate. To overcome the disadvantages of the prior art pugines, an engine according to claim 1 is provided.

The present invention has its primary object to provide an exhaust gas purifying system for a diesel engine which keeps the NOx absorbing capacity of an NOx absorbent reliably stable without significant aggravation of fuel economy or consumption nor increasing smoke, which is realized by devising control of a fuel injection timing while refreshing the NOx absorbent.

In order to accomplish the above-noted objects, the exhaust gas purifying system of the invention includes a NOx absorbent installed in an exhaust passage of an engine which absorbs NOx emissions in an excessively oxygen concentrated atmosphere in which oxygen concentration in exhaust gas is high and sprays an amount of fuel through several times of split fuel injection in an engine operating state where the NOx absorbent releases NOx emissions in response to a drop in oxygen concentration in the exhaust gas, in other words, in a state where an air-to-fuel ratio in the combustion chamber is close to or lower than a stoichiometric air-to-fuel ratio.

Specifically, the exhaust gas purifying system in accordance with a preferred embodiment of the invention is installed to an engine of a type which has a fuel injector for spraying fuel directly into an combustion chamber of each of multiple cylinders and is equipped with exhaust gas purification means such as a NOx absorbent which is disposed in an exhaust gas passage through which exhaust gas is discharged from the engine and, on one hand, absorbs NOx emissions in an excessively oxygen concentrated atmosphere and, on the other hand, releases absorbed NOx emissions in response to a drop in oxygen concentration of the exhaust gas. The exhaust gas purifying system includes fuel injection control means such as an electronic control unit for dividing an amount of fuel to be sprayed through the fuel injector into at least two parts which are sprayed between the beginning of an intake stroke and a first half of a compression stroke following the intake stroke in an engine operating state wherein exhaust gas changes oxygen concentration thereof lower than the excessively oxygen concentrated atmosphere. The term "a drop in oxygen concentration" used herein shall mean and refer to dropping of the oxygen concentration of exhaust gas to, for example, less than three to four %, and more preferably less than one to two %, which corresponds to an air-to-fuel ratio of the exhaust gas close to or richer than the stoichiometric air-to-fuel ratio. The term "excessively oxygen concentrated atmosphere" used herein shall mean and refer to a lean state in which exhaust gas has oxygen concentration higher than a specified level, such as for example 4 %, and which corresponds to an air-to-fuel ratio in exhaust gas that is on a lean side and higher than that on the rich side. It is to be noted that the term "air-to-fuel ratio of exhaust gas" shall mean and refer to a ratio of the total amount of air discharged into the exhaust passage relative to the total amount of fuel contained in the air which agrees with an air-to-fuel ratio in the combustion chamber (an average air fuel ratio in the combustion chamber) unless secondary air and/or secondary fuel is supplied into the exhaust passage.

With the exhaust gas purifying system, when exhaust gas from the engine is in a lean state, the NOx absorbent absorbs NOx emissions in the exhaust gas to purify the exhaust gas. On the other hand, in an engine operating state where exhaust gas from the engine enters a rich state, the amount of fuel that is to be sprayed is divided into at least two parts and sprayed through split fuel injection more than two times between the beginning of an intake stroke and the top dead center of a compression stroke following the intake stroke. Then, the fuel sprayed during an intake stroke is sufficiently and homogeneously diffused in the combustion chamber due to an increase in volume of the combustion chamber 4 along with downward movement of a piston. Even though part of the diffused fuel adheres to the wall surface of the cylinder, the fuel for the most part is sufficiently vaporized and atomized and mixed with air, thus forming a so-called premixed lean fuel mixture in the entire combustion chamber. The fuel sprayed by the end of a first half of a compression stroke is similarly diffused in a relatively small area of the combustion chamber, and is sufficiently vaporized and atomized and mixed with air. Then, the fuel that has adhered to the wall surface of the cylinder is subsequently vaporized and atomized following a rise in cylinder pressure during a second half of the compression stroke. Fuel gas gradually reacts on surrounding oxygen in the premixed lean fuel mixture, so as to generate reaction heat due to the progress of a so-called cold flame reaction. The temperature of the entire combustion chamber increases due to the reaction heat, so that the fuel spray is rapidly vaporized and atomized in the heated combustion chamber. In this way, the fuel that is sprayed during the second half of a compression stroke is not diffused over the entire combustion chamber, so as to form an over-concentrated, self-ignitable fuel mixture partly in a homogeneous premixed lean fuel mixture. Thereafter, as the cylinder temperature reaches the self-ignition temperature of fuel right before the top dead center of a compression stroke, explosive progress of combustion occurs with the over-concentrated fuel mixture as a nucleus. In such a combustion state, even if an amount of fuel injection is increased much more than usual so as to deliver an approximately stoichiometric air-to-fuel ratio in the combustion chamber, part of the fuel is sprayed in an early stage and forms a premixed lean fuel mixture, so that the over-concentrated fuel mixture is brought into an excessive fuel state. In addition, since vaporization and atomization of fuel and mixing with air of the over-concentrated fuel mixture are significantly improved under the reaction heat of the premixed lean fuel mixture, generation of smoke is restrained. In the premixed lean fuel mixture, since the fuel and oxygen are consumed as the cold flame reaction gradually progresses, combustion pressure and combustion temperature does not become excessively high even during the explosive combustion occurring before the top dead center of a compression stroke, so as thereby to restrain generation of NOx emissions.

Therefore, with the exhaust gas purifying system, an average air-to-fuel ratio in the entire combustion chamber is controlled to converge close to or below the stoichiometric air-to-fuel ratio, and, even in an engine operating state where exhaust gas from the engine is rich, the engine is controlled not to generate smoke so much as the conventional diesel engines. Exhaust gas that becomes rich promotes the NOx absorbent to release NOx emissions with an effect of refreshing the NOx absorbent speedy. Since the exhaust gas purifying control system controls the engine to discharge unburnt fuel not so much unlike the conventional control systems, there occurs no significant aggravation of fuel consumption. In other words, the NOx absorbing capacity of the NOx absorbent can be maintained without providing aggravation of fuel consumption and a sharp increase in the amount of smoke.

According to another embodiment of the invention, the exhaust gas purifying system includes air fuel ratio control means for controlling an air-to-fuel ratio in the combustion chamber to converge near to the stoichiometric air-to-fuel ratio, and fuel injection control means for spraying fuel through split fuel injection when the air-to-fuel ratio control means delivers an approximately stoichiometric air-to-fuel ratio in the combustion chamber. The state wherein an air-to-fuel ratio in the combustion chamber is close to an approximately stoichiometric air-to-fuel ratio refers to a ratio of the total amount of air filled in the combustion chamber relative to the total amount of fuel delivered into the combustion chamber is close to the stoichiometric air-to-fuel ratio.

With the exhaust gas purifying system, the air-to-fuel ratio control means controls an air-to-fuel ratio in the combustion chamber to converge at an approximately stoichiometric air-to-fuel ratio during operation of the engine, and while controlling an air-to-fuel ratio of exhaust gas to become close to an approximately stoichiometric air-to-fuel ratio, fuel is sprayed through split fuel injection, so that the same effects and operation of the exhaust gas purifying system according to the above embodiment are achieved. Further, since an air-to-fuel ratio of exhaust gas is converged at the approximately stoichiometric air-to-fuel ratio, a three-way catalytic converter, if installed in the exhaust passage, reduces and deoxidizes NOx emissions released from the NOx absorbent to purify exhaust gas.

The amount of fuel may be divided into two parts for split fuel injection, namely primary fuel injection which is made near the top dead center of a compression stroke of each cylinder and secondary fuel injection which is made between the beginning of an intake stroke prior to the compression stroke and the end of a first half of the compression stroke. Performing the secondary fuel injection before the end of the first half of a compression stroke enables fuel to be sufficiently vaporized and atomized and then mixed with air, as a result of which the same operation and effects as of the previous embodiments are achieved.

The amount of fuel for the secondary fuel injection may be 8 to 23 % of the amount of fuel for the primary fuel injection. If the amount of fuel that is sprayed through the secondary fuel injection is too small, there occurs a problem in that improvement of combustion by reaction heat of a premixed lean fuel mixture is not significant. On the other hand, if the amount of fuel that is sprayed through the secondary fuel injection is too large, the premixed lean fuel mixture is partly self-ignited too early, so as thereby to generate so-called reverse drive force which reduces engine output. On the contrary, when the amount of fuel that is sprayed through the secondary fuel injection is between 8 to 23 %, preferably between 10 to 20 %, of the amount of fuel that is sprayed through the primary fuel injection, the operation and effects of the previous embodiments are sufficiently achieved without accompanying the above problems.

The secondary fuel injection may be performed after the exhaust valve is closed in an intake stroke. as a result of which the fuel sprayed through the secondary fuel injection is prevented from being discharged into the exhaust passage without contributing to combustion.

The air-to-fuel ratio control means may controls an air-to-fuel ratio in the combustion chamber to converge at an approximately stoichiometric air-to-fuel ratio while the engine operates in a high engine load region. Since the engine has a demand for higher output in the high engine load region than in a low engine load region, the amount of fuel is increased so as to deliver the approximately stoichiometric air-to-fuel ratio, thereby sufficiently increasing engine output. The amount of fuel that is sprayed in the high engine load region is essentially large. Therefore, changing an air-to-fuel ratio toward a rich side in response to transition in engine operating condition from the low engine load region to the high engine load region restrains fluctuations of engine output due to changes in air-to-fuel ratio and improves a feeling of comfortable riding.

The exhaust gas purifying system is suitably installed to a direct injection-spark ignition type of diesel engine. In such a case, the exhaust gas purification means may comprise a NOx absorbent which absorbs NOx emissions in an excessively oxygen concentrated atmosphere in which oxygen concentration is at a high level and releases absorbed NOx emissions in response to a decrease in oxygen concentration of the exhaust gas. In an engine operating state where exhaust gas shows a lower oxygen concentration than the excessively oxygen concentrated atmosphere, the fuel injection control means divides the amount of fuel to be sprayed into at least two parts for split fuel injection which are made between the beginning of an intake stroke of a cylinder and an the end of a first half of an expansion stroke following the intake stroke. With the exhaust gas purifying system, fuel is sprayed at least twice through the fuel injector between the beginning of an intake stroke and the end of a first half of an expansion stroke following the intake stroke in the engine operating state where exhaust gas from the diesel engine is on a rich side. Then, the same operation and effects as attained in the first embodiment by burning the fuel sprayed between the beginning of an intake stroke and the near top dead center of a compression stroke following the intake stroke. Spraying fuel between the near top dead center of a compression stroke and a first half of an expansion stroke following the compression stroke causes fuel to be quickly diffused and burnt in the combustion chamber at extremely high temperature and extremely high pressure, so as not to generate smoke so much and, moreover, since the fuel for the most part is burnt, unburnt fuel is not discharged so much. In addition, while, since an approximately stoichiometric air-to-fuel ratio is delivered in the combustion chamber, generation of NOx emissions is restrained, the amount of NOx emissions in exhaust gas decreases due to an increase in the amount of unburnt HC and CO in the exhaust gas resulting from spraying fuel between the near top dead center of a compression stroke and the first half of an expansion stroke and reaction of the unburnt HC and CO on NOx emissions, so as thereby to promote the NOx absorbent to release NOx emissions and refresh the NOx absorbent speedy. Therefore, the NOx absorbent is speedy refreshed without being accompanied by sharp aggravation of fuel consumption nor an increase in smoke generation and steadily maintained in NOx absorbing capacity.

The air-to-fuel ratio control means may control an air-to-fuel ratio in the combustion chamber of a specified cylinder to converge at a ratio on a rich side of the approximately stoichiometric air-to-fuel ratio or lower than the approximately stoichiometric air-to-fuel ratio, and the fuel injection control means sprays fuel through split fuel injection into a cylinder in which an air-to-fuel ratio in the combustion chamber is controlled to converge at a ratio on a rich side. With the exhaust gas purifying system, the same operation and effects as attained in the previous embodiment are realized in the specified cylinder.

The fuel injection control means may divide the amount of fuel injection into at least two parts for split fuel injection, i.e. primary fuel injection which is made near the top dead center of a compression and secondary fuel injection which is made between the beginning of an intake stroke and a first half of an expansion stroke following the compression stroke.

The air-to-fuel ratio control means may switch an air-to-fuel ratio in the combustion chamber either towards a rich side with respect to the stoichiometric air-to-fuel ratio or towards a lean side with respect to the stoichiometric air-to-fuel ratio, and the fuel injection control means may perform only the primary fuel injection when an air-to-fuel ratio in the combustion chamber is changed on the lean side. Changing an air-to-fuel ratio in the combustion chamber on the lean side improves fuel consumption over operation of the engine. At this time, although exhaust gas from the combustion chamber becomes lean, NOx emissions in the exhaust gas is absorbed by an NOx absorbent and the exhaust gas is purified. The secondary fuel injection may be made at a crank angle of 10° to 20° after the top dead center of a compression stroke, which reduces the amount of unburnt fuel that is discharged from the engine during an expansion stroke and restrains sufficiently aggravation of fuel consumption. Further, the secondary fuel injection may be made at a crank angle of 15° to 25° after the top dead center of a compression stroke, which restrains generation of smoke due to incomplete combustion of fuel sprayed into the combustion chamber during an expansion stroke to the minimum. Further, the secondary fuel injection may be made at a crank angle of 15° to 20° after the top dead center of a compression stroke with an effect of sufficiently restraining aggravation of fuel consumption as well as controlling generation of smoke to the minimum.

The amount of fuel that is to be sprayed through the secondary fuel injection may be between approximately 30 to 50 % of the amount of fuel that is to be sprayed through the primary fuel injection, which sufficiently restrains aggravation of fuel consumption as well as controlling generation of smoke to the minimum.

In the variations stated above, the air-to-fuel ratio control means controls an air-to-fuel ratio in the combustion chamber to be on the rich side with respect to the stoichiometric air-to-fuel ratio while the engine operates in the low engine load region, As a result of which, even while the engine still operates in the low engine load region, the NOx absorbent is refreshed while restraining aggravation of fuel consumption and as well as generation of smoke.

The secondary fuel injection may be advanced larger with an increase in engine load with an effect of optimizing the fuel injection at an appropriate timing. Further, a secondary fuel injection ratio, which refers to a ratio of the amount of fuel that is sprayed through the secondary fuel injection relative to the amount of fuel that is sprayed through the primary fuel injection, may be changed lower with an increase in engine load with an effect of optimizing the secondary fuel injection ratio.

According to another embodiment of the invention, the exhaust gas purifying system judges whether or not the NOx absorbent has absorbed NOx emissions more than a specified amount and controls an air-to-fuel ratio in the combustion chamber towards a rich side with respect to the stoichiometric air-to-fuel ratio when the NOx absorbent is determined to have absorbed the specified amount of NOx emissions. In this embodiment, when it is expected that the NOx absorbent experiences deterioration of NOx absorbing capacity due to a significantly high level of NOx absorption that exceeds a specified level, an air-to-fuel ratio is controlled to converge at a ratio on the rich side, so as to refresh the NOx absorbent. On the other hand, an air-to-fuel ratio is controlled to converge at a ratio on the lean side while the level of NOx absorption is still low, so that the NOx absorbent is stably maintained in its NOx absorbing capacity without inducing an unnecessary increase in fuel consumption. The air-to-fuel ratio control means periodically preferably controls an air-to-fuel ratio in a combustion chamber to converge at the approximately stoichiometric air-to-fuel ratio during operation of the engine so as thereby to refresh the NOx absorbent and stably maintain its NOx absorbing capacity.

According to another embodiment of the invention, the exhaust gas purifying system judges whether or not the engine is in an accelerative drive state and controls an air-to-fuel ratio in the combustion chamber to converge towards the rich side where an air-to-fuel ratio is close to or below the stoichiometric air-to-fuel ratio when it is determined that the engine is in the accelerative drive state. With exhaust gas purifying system, an air-to-fuel ratio in the combustion chamber is controlled to converge towards the rich side during acceleration of the engine in which the engine is required to provide high engine output, so that the engine output can be sufficiently increased in conformity with the engine demand. Further, when changing an air-to-fuel ratio in the combustion chamber towards the rich side during a shift of operating condition a normal drive state to the accelerative drive state, since fluctuations of engine output is predicted to occur following a change air-to-fuel ratio, a feeling of comfortable riding is not spoiled.

According to another embodiment of the invention, the exhaust gas purifying system includes an exhaust gas recirculation system for adjustably recirculating partly exhaust gas from the engine into the intake system and switches an air-to-fuel ratio to either a rich side on which the air-to-fuel ratio is close to or below the stoichiometric air-to-fuel ratio or to the lean side on which the air-to-fuel ratio is higher than the stoichiometric air-to-fuel ratio. The exhaust gas recirculation system controls the amount of exhaust gas that is recirculated such that an exhaust gas recirculation ratio, which refers to a ratio of the amount of exhaust gas recirculation relative to the total amount of intake air that is introduced into the combustion chamber, is made higher when switching an air-to-fuel ratio to the rich side than when switching an air-to-fuel ratio to the rich lean side.

With the exhaust gas purifying system, when controlling an air-to-fuel ratio in the combustion chamber towards the rich side, the exhaust gas recirculation system makes the exhaust gas recirculation ratio higher. In other words, the air-to-fuel ratio in the combustion chamber is changed towards the rich side by reducing the amount of fresh intake air that is introduced into the combustion chamber. Further, even though the amount of fuel is increased to change an air-to-fuel ratio in the combustion chamber towards the rich side in order to complement a drop in engine output which is caused due to a reduction in the amount of intake air, the engine is restrained from causing a rise in engine output due to the change in air-to-fuel ratio and, as a result, fluctuations of engine output is reduced. Further, recirculation of exhaust gas induces appropriately slow combustion, so as thereby to restrain generation of NOx emissions following fuel combustion and, at the same time, to promote vaporization and atomization of fuel and mixing with air, as a result of which, the combustibility of fuel mixture is improved with an effect of further restraining generation of smoke.

According to another embodiment of the invention, the exhaust gas purifying system includes intake air regulation means for regulating the amount of intake air that is introduced into the combustion chamber and switches an air-to-fuel ratio to either a rich side on which the air-to-fuel ratio is close to or below the stoichiometric air-to-fuel ratio or to the lean side on which the air-to-fuel ratio is higher than the stoichiometric air-to-fuel ratio. The intake air regulation means the amount of intake such that the amount of intake air is increased larger when switching an air-to-fuel ratio to the rich side than when switching an air-to-fuel ratio to the rich lean side.

With the exhaust gas purifying system, when the air-to-fuel ratio in the combustion chamber is changed towards the rich side, the amount of intake air that is introduced into the combustion chamber is reduced. Thus, similar to the previous embodiment, a change in engine output due to a change in air-to-fuel ratio in the combustion chamber is restrained.

According to still another embodiment of the invention, the exhaust gas purifying system is suitably installed to a direct injection-spark ignition type of diesel engine which is equipped with a catalyst for purifying exhaust gas from the combustion chamber. The catalyst lowering levels of harmful emissions in exhaust gas to purify the exhaust gas when an air-to-fuel ratio of exhaust gas is on the rich side where the air-to-fuel ratio of exhaust gas is close to or below the stoichiometric air-to-fuel ratio. The air-to-fuel ratio control is performed in connection with a specified cylinder only, and fuel injection is made at least twice through split fuel injection which are performed between the beginning of an intake stroke and a first half of an expansion stroke following the intake stroke in the specified cylinder.

With the exhaust gas purifying system, an air-to-fuel ratio in the combustion chamber of the specified cylinder is controlled to converge at the stoichiometric air-to-fuel ratio during operation of the diesel engine, and at the same time, the split fuel injection is made to spray fuel in the combustion chamber of the specified cylinder. The split fuel injection prevents generation of a large amount of smoke even though the air-to-fuel ratio in the combustion chamber converges at the stoichiometric air-to-fuel ratio. Since an air-to-fuel ratio of exhaust gas is controlled to converge at the approximately stoichiometric air-to-fuel ratio, the exhaust gas is purified by lowering levels of harmful emissions by the catalyst installed in the exhaust passage. In other words, the exhaust gas is purified by the catalyst without increasing smoke in the exhaust gas. A three-way catalytic converter is significantly effectively to effectively lower levels of HC, CO and NOx emissions in exhaust gas, and hence purify the exhaust gas.

The amount of fuel that is to be sprayed may be divided into two parts for primary fuel injection which is made near the top dead center of a compression stroke of a specified cylinder and secondary fuel injection which is made between the beginning of an intake stroke and a first half of a compression stroke following the intake stroke. The amount of fuel that is to be sprayed through the secondary fuel injection is preferably between 8 and 23 % of the amount of fuel that is to be sprayed through the primary fuel injection.

With the exhaust gas purifying system, since the amount of fuel that is sprayed is divided into at least two parts for the primary fuel injection which is made near the top dead center of a compression of the specified cylinder and the secondary fuel injection which is made between the beginning of an intake stroke and a first half of the compression stroke, even when an air-to-fuel ratio in the combustion chamber is on the rich side, an increase in the amount of smoke is restrained. Further, since an air-to-fuel ratio in the combustion chamber becomes towards the rich side, the level of NOx emissions is lowered. Moreover, spraying fuel through the secondary fuel injection by an amount of between 8 to 23 % of the amount of fuel sprayed through the primary fuel injection prevents a decline in engine output while sufficiently improving combustion.

The amount of fuel that is sprayed may be divided into two parts for the primary fuel injection which is made near the top dead center of a compression of the specified cylinder and secondary fuel injection which is made between completion of the primary fuel injection and a first half of an expansion stroke.
The amount of fuel for the secondary fuel injection is preferably between 30 and 50 % of the amount of fuel for the primary fuel injection. When controlling an air-to-fuel ratio in the combustion chamber towards the rich side, a level of NOx emissions is lowered and an increase in the amount of smoke is restrained. Spraying fuel through the secondary fuel injection by an amount of 30 to 50 % of the amount of primary fuel injection, minimizes generation of smoke while satisfactorily restraining aggravation of fuel consumption.

According to a further embodiment of the invention, the exhaust gas purifying system, which is suitably installed to a direct injection-spark ignition type of diesel engine, has engine load detection means for detecting an engine load with which the diesel engine operates. The amount of fuel that is to be sprayed is divided into at least two parts for primary fuel injection which is made at the top dead center of a compression stroke of a specified cylinder and secondary fuel injection which is made between the beginning of an intake stroke and a first half of an expansion stroke. The ratio of the amount of secondary fuel injection relative to the amount of primary fuel injection is made smaller as the engine load becomes higher.

With the exhaust gas purifying system, it is enabled to reduce NOx emissions and restrain generation of smoke. Further, since the ratio of the amount of secondary fuel injection relative to the amount of primary fuel injection is made smaller as the engine load becomes higher, the secondary fuel injection ratio is optimized. In this embodiment, the secondary fuel injection may be made either between the beginning of an intake process and a first half of a compression stroke, or between completion of the primary fuel injection and a first half of an expansion stroke with the result of the same operation and effect as attained in the above embodiment.

The above and other objects and features of the present invention will be clearly understood from the following description with respect to the preferred embodiment thereof when considered in conjunction with the accompanying drawings, in which:
Figure 1 is a schematic view of the entire structure of an exhaust gas purifying system installed to a diesel engine of the invention;
Figure 2A is an explanatory cross-sectional views showing a turbine of a variable geometric turbosupercharger in which an A/R ratio is small;
Figure 2B is an explanatory cross-sectional views showing the turbine of the variable geometric turbosupercharger in which the A/R ratio is large;
Figure 3 is a structural view of a an exhaust gas recirculation valve and its associated drive system;
Figure 4 is a flow chart illustrating a sequence routine of fuel injection control in accordance with an embodiment of the invention;
Figure 5 is a diagram showing a high engine load region in which split fuel injection is performed;
Figure 6 is a time chart illustrating injection timings at which early fuel injection and latter fuel injection are made, respectively;
Figure 7 is a diagram showing early fuel injection timing with respect to engine speed;
Figure 8 is a diagram showing engine output characteristic with respect to early fuel injection timing;
Figure 9 is a diagram showing engine output characteristic with respect to early fuel injection ratio;
Figure 10 is a diagram showing early fuel injection characteristic with respect to a lapse of time;
Figures 11A - 11C are time charts showing timings at which pre-fuel injection, primary fuel injection and post-fuel injection, respectively;
Figures 12A and 12B are a flow chart illustrating a sequence routine of fuel injection control in accordance with another embodiment of the invention;
Figure 13 is a fuel injection control map shown by way of example;
Figure 14 is a flow chart illustrating a sequence routine of exhaust gas recirculation control;
Figure 15 is an exhaust gas recirculation ratio control map shown by way of example;
Figure 16 is an intake air control map shown by way of example;
Figure 17 is a diagram showing the relationship between excess air ratio and the amount of smoke;
Figure 18 is a exhaust gas recirculation ratio control map shown by way of example;
Figure 19 is a flow chart illustrating a sequence routine of intake throttle valve control;
Figure 20 is a intake throttle valve control map shown by way of example;
Figure 21 is a flow chart illustrating a sequence routine of variable vane control;
Figure 22 is a flow chart illustrating a sequence routine of nozzle area control;
Figure 23 is a diagram showing the amount of smoke with respect to excess air ratio in connection with split fuel injection and blanket fuel injection;
Figure 24 is a diagram showing the amount of smoke and fuel consumption ratio with respect to post-fuel injection timing;
Figure 25 is a diagram showing the amount of smoke and fuel consumption ratio with respect to post-fuel injection ratio;
Figure 26 is a diagram showing the relationship between air-to-fuel ratio in the combustion chamber and fuel consumption ratio;
Figures 27A and 27B are a flow chart illustrating a sequence routine of fuel injection control in accordance with another embodiment of the invention;

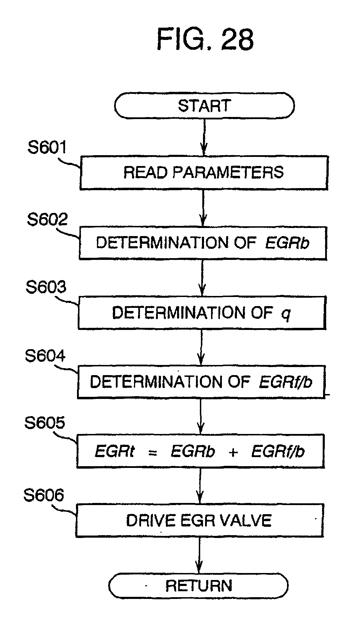

Figure 28 is a flow chart illustrating a sequence routine of exhaust gas recirculation control;
Figure 29 is a flow chart illustrating a sequence routine of intake throttle valve control;
Figure 30 is a diagram showing the relationship between intake passage cross-section area and accelerator pedal travel; and
Figure 31 is a flow chart illustrating a sequence routine of fuel injection control in accordance with a further embodiment of the invention.

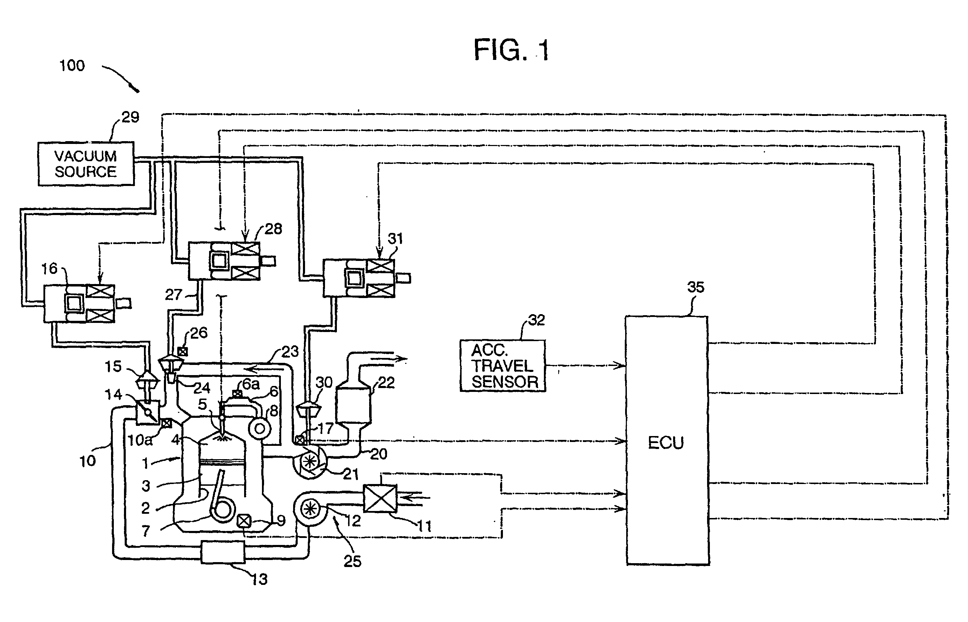

Referring to the drawings in detail, and in particular, to Figure 1 which shows the entire structure of an exhaust gas purifying system 100 for a diesel engine according to an embodiment of the invention, denoted by a reference numeral 1 is a multiple cylinder diesel engine carried in a vehicle. The diesel engine 1 has multiple cylinders 2 (only one of which is shown in the figure), in which pistons 3 are received to slide. A combustion chamber 4 is formed inside each cylinder 2 by the piston 3. Also, a fuel injector (fuel injection valve) 5 is arranged roughly at the center of a top of the combustion chamber 4 with its nozzle faced to the combustion chamber 4. The fuel injector 5 is opened and closed at a predetermined injection timing to directly spray fuel into the combustion chamber 4. Each fuel injector 5 mentioned above is connected to a common rail (pressure accumulating chamber) 6 for accumulating high-pressure fuel to which a pressure sensor 6a is installed to detect internal fuel pressure as common rail pressure connected to a high-pressure supply pump 8 driven by a crank shaft 7 of the diesel engine 1. The high-pressure supply pump 8 maintains fuel pressure inside the common rail 6, which is detected by the pressure sensor 6a, above a predetermined level (for instance, about 20 MPa or above during idle or 50 Mpa or above in other engine operating states). Also, a crank angle sensor 9 is provided for detecting rotational angle of the crank shaft 8, which comprises a plate for detection (not shown) secured to one end of the crank shaft 7 and an electromagnetic pickup (not shown) arranged correspondingly in position to the outer periphery of the plate. The electromagnetic pickup outputs pulse signals in response to the passage of protrusions arranged at regular angular intervals angle on the entire outer periphery of the plate. The diesel engine 1 has an intake passage 10 for supplying intake air to the combustion chamber 4 of the engine 1 after filtering it by an air cleaner (not shown). The intake passage 10 at a downstream end is branched off through a surge tank and connected respectively to the combustion chambers 4 of the cylinders 2 through intake ports. An intake pressure sensor 10a is provided in order to detect a supercharging pressure inside the surge tank that is supplied to the cylinders 2. The intake passage 10 is provided in order from the upstream to the downstream with a hot film type of air flow sensor 11 which detects an amount of fresh intake air introduced into the intake passage 10, a blower 12 which is driven by a turbine 21 of a turbosupercharger (which is hereafter referred to as a turbocharger for simplicity) 25 to compress intake air, an intercooler 13 for cooling the intake air compressed by this blower 12, and an intake throttle valve 14 as means for reducing the amount of fresh intake air by reducing the cross section of the intake passage 10. The intake throttle valve 14 is of a type comprising a butterfly valve which has a notch so as to admit intake air even while it is fully closed. Similar to an exhaust gas recirculation valve 24 which will be described later, the intake throttle valve 14 is controlled to change its opening by controlling the level of negative pressure on a diaphragm 15 by an electromagnetic valve 16. Although not shown in the figure, there is provided a sensor for detecting the opening of the intake throttle valve 14. Denoted by a reference numeral 20 is an exhaust passage through which exhaust gas is discharged from the combustion chamber 4 of each cylinder 2. The exhaust passage 20 at the upstream end is branched off and connected to the combustion chambers 4 of each cylinder 2 through exhaust ports. The exhaust passage 20 is provided, in order from the upstream to the downstream, with an oxygen (O₂) sensor (which is hereafter referred to as an O₂ sensor) 17 which detects the oxygen concentration of exhaust gas, the turbine 21 which is driven by an exhaust gas flow and a catalytic converter 22 which lowering levels of emissions, such as HC, CO and NOx emissions and particulate in exhaust gas to purify the exhaust gas.

The O₂ sensor 17 is used to detect an air-to-fuel ratio based on an oxygen concentration of the exhaust gas, and has a characteristic wherein an output changes sharply when oxygen in exhaust gas is almost zero, in other words, when an air-to-fuel ratio is around a stoichiometric air-to-fuel ratio. The catalytic converter 22 has two catalyst layers formed on the wajl surface of a number of pours or holes of a cordierite honeycomb substrate (not shown). The pours extend in parallel along an axial direction (a direction of exhaust gas flow). The catalytic converter 22 is of a type which lowers the level of NOx emissions by, on one hand, absorbing NOx emissions in an excessively oxygen concentrated atmosphere, i.e. in exhaust gas with a high concentration of oxygen and, on the other hand, releases the NOx emissions in a rich state where the oxygen concentration is lower than in the excessively oxygen concentrated atmosphere. In other words, the catalytic converter 22 comprises an NOx absorbent that releases NOx emissions when an air-to-fuel ratio is in the rich state where the air-to-fuel ratio is around the stoichiometric air-to-fuel ratio or lower and, on the other hand, absorbs NOx emissions when an air-to-fuel ratio is in a lean state where the air-to-fuel ratio is higher than the stoichiometric air-to-fuel ratio. More specifically, for the wall surface of the substrate, a two-layer coating is applied wherein an inner catalyst layer supporting alumina or ceria that carries platinum (Pt) and at least one selected from a group including alkaline earth metals such as barium (Ba), alkali metals and rare earth metals as an NOx absorbent and an outer catalyst layer supporting zeolite that carries noble metals such as platinum Pt are formed. The catalyst is not limited to the above mentioned structure, and can be acceptable as long as the catalytic materials reduce NOx emissions in the rich state where an air-to-fuel ratio is around the stoichiometric air-to-fuel ratio or smaller, and have an NOx absorbent.

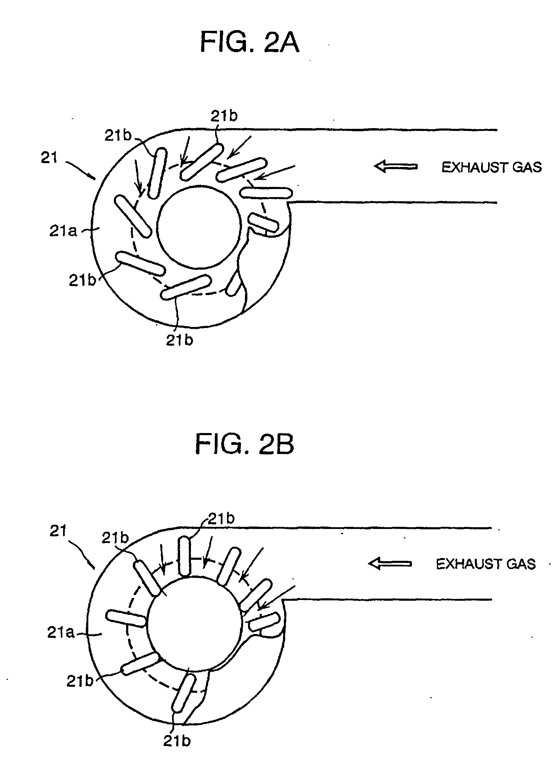

Referring to Figure 2A and 2B, the turbocharger 25 is of a variable geometric type and comprises the turbine 21 and the blower 12. The turbine 21 has a number of variable vanes 21b arranged in a turbine chamber 21a so as to surround the entire periphery of the turbine chamber 21a. These variable vane 21b are variable in angle to change a nozzle cross-sectional area (A) through which an exhaust gas stream flows through. In this variable geometric turbocharger 25, as shown in Figure 2A, the variable vanes 21b are positioned at small angles relative to the circumferential direction of the turbine 21 so as to reduce the nozzle cross-sectional area (A), which causes an increase in supercharging efficiency even in a region of low engine speeds where an exhaust gas flow is small. On the other hand, as shown in Figure 2B, the variable vanes 21b are directed to the center of the turbine 21 so as to increase the nozzle cross-sectional area (A) with an effect of increasing supercharging efficiency even in a region of high engine speeds where an exhaust gas flow is large.

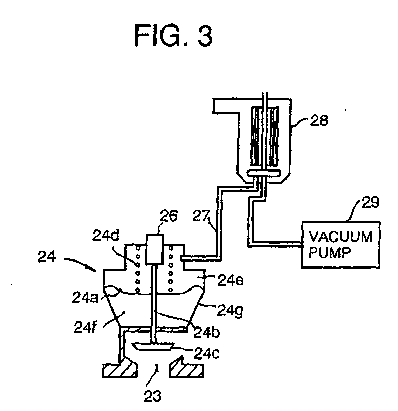

The exhaust passage 20 at the upstream from the turbine 21 is branched off and connected to an exhaust gas recirculation (EGR) passage 23 through which exhaust gas is partly recirculated into the intake stream. The exhaust gas recirculation passage 23 at the downstream end is connected to the intake passage 10 at a further downstream side relative to the intake throttle valve 14. The exhaust gas recirculation passage 23 at a point close to the downstream end is provided with an exhaust gas recirculation (EGR) valve 24 which is operated by negative pressure to adjust its opening so as to admit partly exhaust gas from the exhaust passage 20 into the intake passage 10. The exhaust gas recirculation valve 24, as shown in Figure 3, comprises a valve rod 24b connected to a diaphragm 24a by which a valve box 24g is divided into upper and lower chambers 24e and 24f, and a valve body 24c which adjustably opens or closes the exhaust gas recirculation passage 23 so as to linearly change an area through which exhaust gas flows. The exhaust gas recirculation valve 24 is provided with a lift sensor 26 secured to one end of the valve rod 24b. The valve body 24c is forced by a spring 24d in a closing direction (downward as viewed in Figure 3). A vacuum passage 27 is connected between a vacuum pump (pressure source) 29 through an electromagnetic valve 28 which controls negative pressure. The negative pressure in the vacuuming chamber 24e, with which the exhaust gas recirculation valve 24 is driven, is controlled by energizing the electromagnetic valve 28 with a control signal (electric current) from an electronic control unit (ECU) 35 which will be described later to open or shut the vacuum passage 27, by means of which the exhaust gas recirculation passage 23 is linearly changed in its opening by the valve body 24c. Similarly to the exhaust gas recirculation valve 24, the turbocharger 25 is provided with a diaphragm 30 in connection with the variable vanes 21b of the turbine 21 such that the variable vanes 21b are controlled in angle relative to the turbine 21 by controlling negative pressure on the diaphragm 30 by an electromagnetic valve 31.

The electronic control unit 35 receives signals from the pressure sensor 6a, the crank angle sensor 9, the air flow sensor 11, the O₂ sensor 17, the lift sensor 26 of the exhaust gas recirculation valve 24, and an accelerator travel sensor 32 for detecting a travel of an accelerator pedal (not shown), respectively, and provides control signals by which the fuel injector 5, the high-pressure supply pump 8, the intake throttle valve 14, the exhaust gas recirculation valve 24, the variable vanes 21b of the turbocharger 25 are operated. While the fuel injector 5 is controlled to spray a controlled amount of fuel at a controlled timing in accordance with engine operating conditions, at the same time, control of the common rail pressure, i.e. injection pressure of. fuel, is made by the high-pressure supply pump 8. In addition, control of the amount of fresh intake air by the intake throttle valve 14, control of the amount of exhaust gas recirculation by the exhaust gas recirculation valve 24, and control of the variable vanes 21b of the turbocharger 25 are carried out. More specifically, a fuel injection map that prescribes an amount of fuel injection *Q* which is empirically determined in appropriately accordance with a target engine output torque and an engine speed and is electronically stored in a memory. Ordinarily, a basic amount of fuel injection *Qbase* is read from the fuel injection map based on a target engine output torque which is determined in accordance with an output signal from the accelerator travel sensor 32 and an engine speed which is determined in accordance with an output signal from the crank angle sensor 9. An injection time for which the fuel injector 5 is kept open is determined based on this basic amount of fuel injection *Qbase* and the common rail pressure detected by the pressure sensor 6a. By means of the basic fuel injection control, fuel is sprayed by an amount in accordance with the target engine output torque, so as to operate the engine 1 with an average air-to-fuel ratio on a lean side, which is significantly higher than a stoichiometric air-to-fuel ration of 18.

One of the significant features of the control system of the invention is that, when an estimated level of NOx absorption becomes higher than a specified level and it is therefore assumed that the catalytic converter 22 encounters aggravation of NOx absorbing capacity, while estimating the level of NOx absorption of an NOx absorbent of the catalytic converter 22 and causing a change of an air-to-fuel ratio approximately to the stoichiometric air-to-fuel ratio, the control system performs split fuel injection control in which fuel injection is divided into two parts, namely early split fuel injection or secondary split fuel injection which is made between the beginning if intake stroke and a first half of a compression stroke and later split fuel injection or primary split fuel injection which is made near the top dead center (TDC) of the compression stroke.

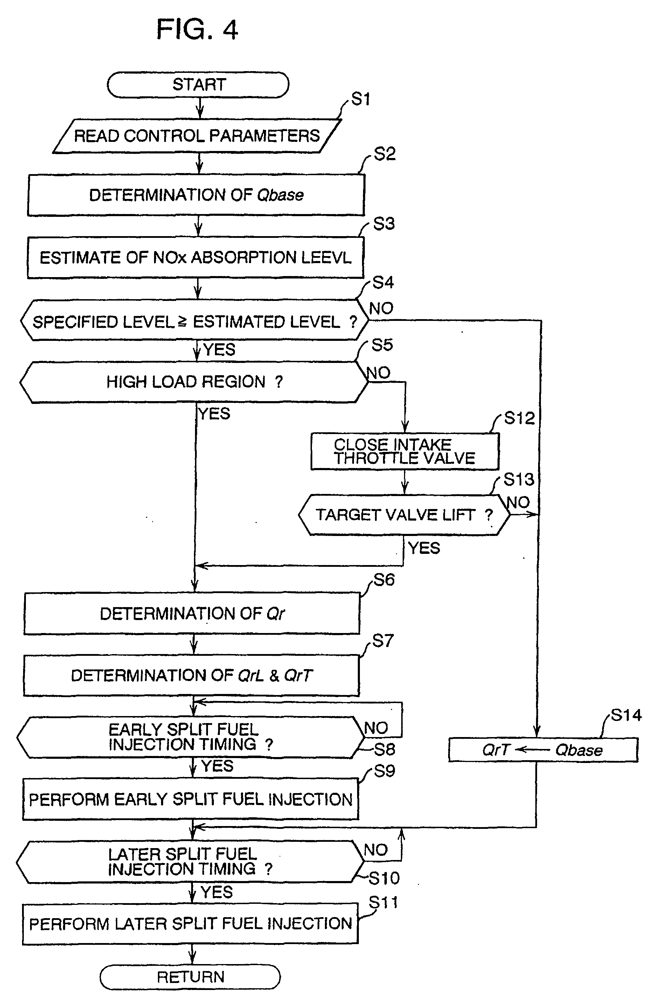

Figure 4 is a flow chart illustrating a sequence routine of the fuel injection control which is performed by the electronic control unit 35. The fuel injection control is carried out every specified crank angle (CA) by cylinder. When the sequence logic commences and control proceeds directly to a block at step S1 where various control parameters including at least a crank angle (CA), oxygen concentration, an amount of fresh intake air, an accelerator pedal travel. Subsequently, at step S2, a basic amount of fuel injection *Qbase is* determined on the fuel injection map in accordance with target engine output torque which is determined on the basis of the accelerator pedal travel and an engine speed which is determined on the basis of the crank angle. An estimate of the level of NOx absorption of the NOx absorbent is made at step S3. Thereafter, a decision is made at step S4 as to whether the specified level of NOx absorption has been exceeded by the estimated level of NOx absorption. When the answer to the decision is affirmative, this indicates that the estimated level of NOx absorption is higher than the specified level of NOx absorption, then, the control proceeds to step S5. On the other hand, when the answer to the decision is negative, this indicates that the estimated level of NOx absorption is less than the specified level of NOx absorption, then, control proceeds to step S14.

The level of NOx absorption of the NOx absorbent is estimated based on a value which is obtained by, for example, multiplying a total travel distance of the vehicle by a total amount of fuel injection for the travel distance. Otherwise, it may be estimated based on a value which is obtained by multiplying a total time of engine operation by a total amount of fuel injection and corrected in accordance with engine operating conditions or may more simply be estimated based on a total time of engine operation.

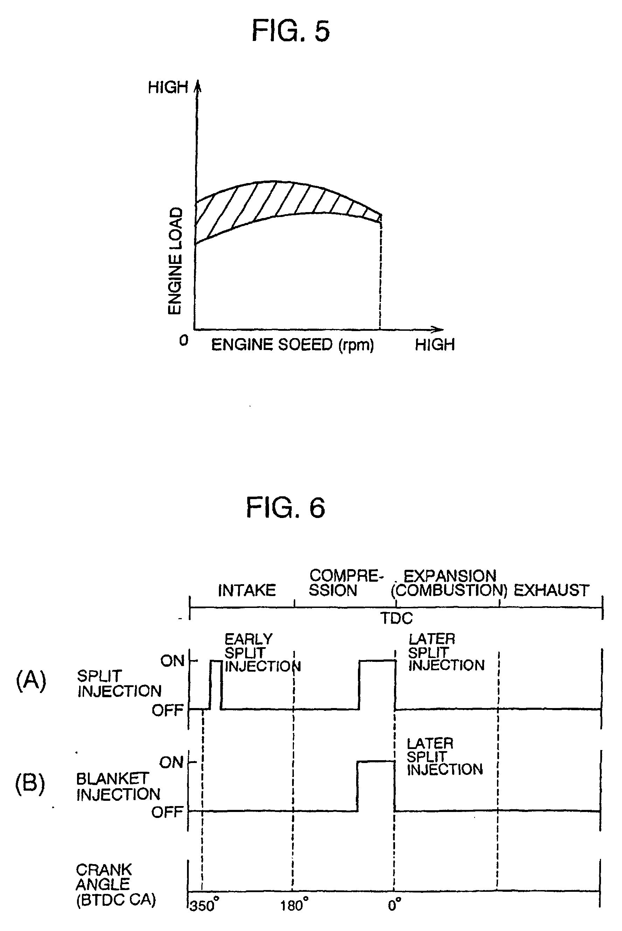

When the estimated level of NOx absorption is higher than the specified level, another decision is made at step S5 as to whether the engine 1 is in an engine operating region of high engine loads. The Electronic control unit 35 has a map of engine operation regions with respect to engine load and engine speed such as shown in Figure 5 which is electronically stored in the memory. The engine operating region of high engine load, which is shaded in Figure 5), is prescribed on the map beforehand. When the engine 1 is in the engine operating region of high engine load, the control proceeds to step S6. On the other hand, when the engine 1 is out of the engine operating region of high engine load, the control proceeds to step S12. At step S6, A corrected amount of fuel injection *Qr* is determined by correctively increase the basic amount of fuel injection *Qbase* so as to deliver an approximately stoichiometric air-to-fuel ratio as an average air-to-fuel ratio in the combustion chamber 4. Specifically, an amount of fuel injection *Qr* is determined so as to deliver an approximately stoichiometric air-to-fuel ratio for the amount of fresh intake air found from an output signal from the air flow censor 11. Further, the amount of fuel injection may be feedback controlled and corrected on the basis of an output signal from the O₂ sensor 17 as the corrected amount of fuel injection *Qr.* Air-to-fuel ratio can be precisely controlled by a feedback correction of an amount of fuel injection based on an output signal from the O₂ sensor 17. Subsequently, at step S7, the corrected amount of fuel injection *Qr* is divided into two parts, an amount of early split fuel injection *QrL* and an amount of latter split fuel injection *QrT.* The ratio of the early split fuel injection relative to the later split fuel injection is empirically determined beforehand in accordance with engine loads and engine speeds and recorded in the memory as a map. The ratio of the early split fuel injection *QrL* is 8 to 23% of the latter split fuel injection *QrT* and is changed greater with an increase in engine load. The remaining part of fuel injection is assigned to the latter injection. Subsequently, at step S8, a decision is made as to whether an early split fuel injection timing is reached. This decision is made based on a crank angle and repeated until the timing is reached. When the early split fuel injection timing is reached, the early split fuel injection is executed at step S9. Similarly, at step S10, a decision is made as to whether a later split fuel injection timing is reached. This decision is also made based on a crank angle and repeated until the timing is reached. When the later split fuel injection timing is reached, the later split fuel injection is executed at step S11. Then, the control returns to another cycle of the sequence routine.

As shown in Figure 6A, the early split fuel injection is set herein so as to start at a timing during a first half of an intake stroke of the cylinder 2, and, more specifically, after the exhaust valve of the cylinder 2 has closed (for example after a point 350° CA before TDC). On the other hand, the latter split fuel injection is set to start at a timing which is an approximately end (near the top dead center) of a compression stroke like normal fuel injection. By starting the early split fuel injection after the exhaust valve has closed, the fuel delivered through the early split fuel injection is prevented from flowing out into the exhaust passage 20 without contributing to combustion. Moreover, the early split fuel injection timing may be basically set between the beginning of intake stroke and a first half of compression stroke as will be described in detail later, and the frequency of the early split fuel injection is not limited to once and may be twice or more. Thus, when the NOx absorbent shows the level of NOx absorption higher than the specified level and is consequently expected to cause aggravation of NOx absorbing capacity and when the engine 1 operates in the engine operating region of high engine load, while the amount of fuel injection *Q* is correctively increased so as to converge an air-to-fuel ratio near to the stoichiometric air-to-fuel ratio, the fuel is split into two portions and sprayed through the early split fuel injection and the latter split fuel injection.

On the other hand, when the answer to the decision made at step S5 is negative, this indicates that the engine 1 operates out of the engine operating region of high engine load, then, at step S12, the intake throttle valve 14 is closed to a target opening.
The target opening of the intake throttle valve 14, which is empirically prescribed in accordance with engine load and engine speed and is recorded as a map in the memory, increases as an engine load becomes higher or an engine speed becomes higher. Subsequently, a judgement is made based on an output signal from a valve lift sensor (not shown) at step S13 as to whether the intake throttle valve 14 has closed to the target opening. When the target opening has not yet been reached, the control proceeds to step S14. On the other hand, when the intake throttle valve 14 has closed to the target opening, fuel injection is performed through steps S6 - S11 to spray the corrected amount of fuel injection *Qr* through the early and later split fuel injection. In other words, when it is expected that the NOx absorbent has encountered aggravation of NOx absorbing capacity due to a level of NOx absorption higher than the specified level, while the intake throttle valve 14 is throttled to reduce the amount of intake air that is introduced into the combustion chamber 4 and the amount of fuel injection is correctively increased so as to deliver an approximately stoichiometric air-to-fuel ratio if the engine 1 operates out of the engine operating region of high engine load, fuel injection is performed through the early and later split fuel injection. Moreover, during a period in which the amount of intake air is considered to be insufficiently decreased due to an operational delay of the intake throttle valve 14, the control of fuel injection through steps S6 through S9. Specifically, when the answer to the decision made at step S4 is negative, this indicates that the estimated level of NOx absorption is still less than the specified level of NOx absorption, or when the answer to the decision made at step S13 is negative, this indicates that the intake throttle valve 14 has not yet closed to the target opening, then, after setting the basic amount of fuel injection *Qbase* read from the fuel injection map at step S2 as an amount of fuel injection *QrT at* step S14, the later split fuel injection is performed to spray the amount of fuel injection *QrT* collectively at a timing near the top dead center of a compression stroke as shown in Figure 6B at step S11. Then, the control returns to another cycle of the sequence routine.

Summarizing the operation and effects of the control system in accordance with the above embodiment of the invention, during the operation of the engine 1, as shown in Figure 6B, the basic amount of fuel injection *Qbase* is normally sprayed once as a whole through the fuel injector 5 at the end of a compression stroke through steps S14, S10 and S11) and the fuel mixture which is lean is burnt in the combustion chamber 4. The NOx absorbent of the catalytic converter 22 absorbs NOx emissions that is generated accompanying the combustion. On the other hand, when the NOx absorption state determining means 35a determines that the amount of NOx emissions absorbed by the NOx absorbent has reached the specified level of NOx absorption, the air-to-fuel ratio control means 35b performs split fuel injection through the early split fuel injection in a first half of an intake stroke and the latter split fuel injection at the end of a compression stroke while performing the control of increasing an amount of fuel injection so as to converge an air-to-fuel ratio near to the stoichiometric air-to-fuel ratio. The fuel sprayed through the early split fuel injection in an intake stroke is sufficiently and evenly dispersed in the combustion chamber 4 as the volume of the combustion chamber 4 increases along with a downward movement of the piston 3, and the most part of the fuel is sufficiently vaporized and atomized and mixed with air even though a small part of the fuel sticks to the inner wall surface of the cylinder 2, thus forming what is called a premixed lean fuel mixture entirely in the interior of the combustion chamber 4. Along with an increase in cylinder pressure in a second half of the compression stroke, the fuel adhered to the inner wall surface of the cylinder 2 is also vaporized and atomized and fuel gas gradually reacts to surrounding oxygen in the pre-mixed lean fuel mixture, thus generating reaction heat due to progress of so-called cold flame reaction. Since the interior temperature of the entire combustion chamber 4 increases due to the reaction heat, a spray of the fuel made through the latter split fuel injection in the combustion chamber 4 with the interior risen in temperature is rapidly vaporized and atomized. The spray of fuel through the latter split fuel injection does not diffuse over the entire combustion chamber 4 and, however, converts part of the homogeneous pre-mixed lean fuel mixture into a self-ignitable over rich fuel mixture. Thereafter, when the cylinder temperature reaches a self-ignitable temperature of fuel before the top dead center of a compression stroke, combustion is accelerated explosively with the over rich fuel mixture portion as a core. Even while the total amount of fuel injection through the early and latter split fuel injection is much more than through normal fuel injection so as to cause an average air-to-fuel ratio in the combustion chamber 4 near the stoichiometric air-to-fuel ratio due to such a combustion condition, the fuel sprayed through the early split fuel injection diffuses over the entire interior of the combustion chamber 4 and provides a pre-mixed lean fuel mixture therein. Since the amount of fuel sprayed only through the latter split fuel injection is not too great, the over rich fuel mixture provided by the latter split fuel injection will not form an excess fuel condition. Moreover, vaporization and atomization of fuel of the over rich fuel mixture and mixing the fuel with air are significantly improved due to reaction heat of the premixed lean fuel mixture, thus restraining generation of smoke. According to the exhaust gas purifying system 100, unlike the conventional systems, an average air-to-fuel ratio in the combustion chamber 4 is controlled to converge near to the stoichiometric air-to-fuel ratio without increasing smoke in exhaust gas, as a result of which the exhaust gas is placed in rich condition to force the NOx absorbent of the catalytic converter 22 to release NOx emissions therefrom. In other words, the NOx absorbent is refreshed without increasing smoke in exhaust gas and steadily keeping its NOx absorbing capacity. Further, refreshing the NOx absorbent is carried out only when aggravation of NOx absorbing capacity is expected to occur resulting from a rise in an estimated level of NOx absorption and the air-to-fuel control is carried out so as to change an air-to-fuel ratio into the lean state while the level of NOx absorption is low, so that fuel consumption is totally improved during operation of the engine 1. Moreover, while refreshing the NOx absorbent, an air-to-fuel ratio is switched near to the stoichiometric air-to-fuel ratio only by increasing the amount of fuel injection when the engine 1 operates in the engine operating region of high engine load, so that fluctuations in engine output of the engine 1 is small even if an air-to-fuel ratio is switched in the engine operating region of high engine load wherein a large amount of fuel is ordinarily sprayed, which provides the passengers with comfortable riding feeling. In this embodiment, when aggravation of NOx absorbing capacity of the NOx absorbent is concerned, refreshing the NOx absorbent is carried out only for one cycle. However, a switch near to the stoichiometric air-to-fuel ratio may be maintained for a predetermined period (for instance, several seconds) since an occurrence of the concern about aggravation of NOx absorbing capacity of the NOx absorbent. On the other hand, except for the engine operating region of high engine load operation, the intake throttle valve 14 is closed so as to reduce the amount of intake air admitted into the combustion chamber 4 simultaneously with increasing the amount of fuel injection. In consequence, a rise in engine output accompanying an increase in the amount of fuel injection is cancelled by a drop due to the decline of the amount of intake air, so that fluctuations of engine output due to the switch of air-to-fuel ratio is suitably controlled, as a result of which the passenger experiences only controlled aggravation of comfortable riding feeling which is caused by the switch of air-to-fuel ratios.

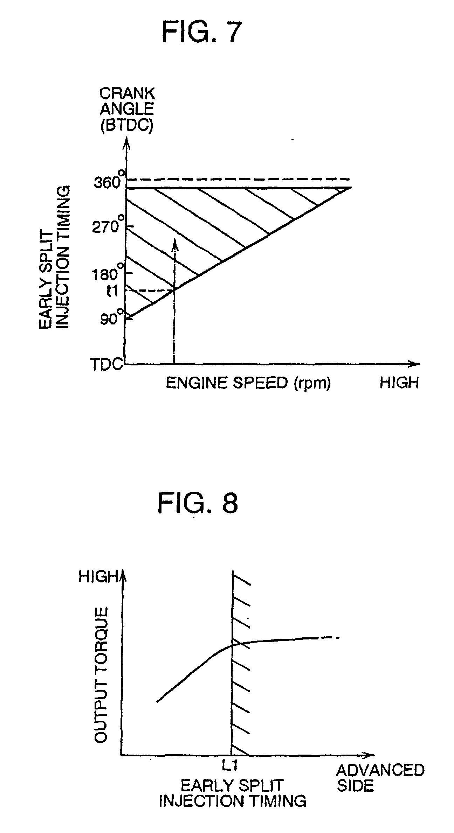

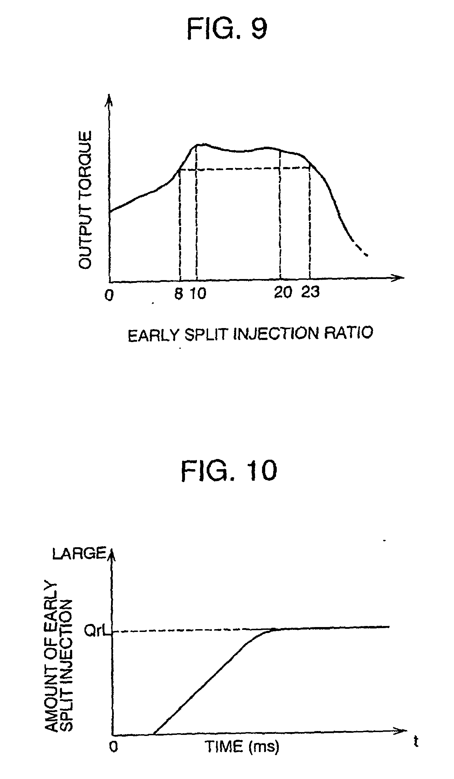

The conditions of early split fuel injection are now examined more in detail. As described above, in order to deliver a near stoichiometric air-to-fuel ratio as an average air-to-fuel ratio in the combustion chamber 4 and also to avoid an increase in smoke, a fuel spray provided through the early split fuel injection must be diffused sufficiently and homogeneously in the combustion chamber 4 and fully vaporized and atomized so as to be mixed with air. In order to realize this, the early split fuel injection must be carried out at least in a first half of a compression stroke of each cylinder 2. Even though vaporization and atomization of a fuel spray and mixing with air generally change significantly due to pressure, humidity, and an intake flow in the combustion chamber 4, they basically progress in accordance with a lapse of time after fuel injection, so that it is desirable to carry out fuel injection early as engine speed is higher so as to provide a long period of time for vaporization and atomization of a fuel spray and mixing with air. Therefore, as shown in Figure 7, the early injection timing is preferable to be between the beginning of an intake stroke (after BTDC 350° CA) and a first half of a compression stroke (before BTDC 90° CA) and to be in a range (shaded in Figure 7) where it is advanced more as the engine speed increases. For this reason, as illustrated by a virtual line in Figure 7, measurements of engine output torque were made while the early split fuel injection timing is gradually advanced from around top-dead-center of a compression stroke with the engine speed kept constant. The result is shown in Figure 8. As apparent, it is demonstrated that engine output torque gradually rises as the split fuel injection timing is advanced up to the shaded range in Figure 7 and is, however, hardly changeable even when the split fuel injection timing is advanced into the shaded range. This indicates that, when the early split fuel injection timing is set to a later point of time outside of the shaded range, vaporization and atomization of a fuel spray and mixing with air are insufficient and will be accelerated as the early split fuel injection timing is advanced more and, on the other hand, when the early split fuel injection timing is advanced into the shaded range, vaporization and atomization of a fuel spray and mixing with air are sufficient. Further, measurements of a change in engine output torque with respect to a change in early split fuel injection ratio which refers to a ratio of the amount of early split fuel injection relative to the amount of later spilt fuel injection were made. As apparent from Figure 9 which shows the result of measurements, it is demonstrated that the engine output torque becomes sufficiently high with early split fuel injection ratios between 8 to 23 %. This is due to the fact that the cold flame reaction of a pre-mixed lean fuel mixture which is provided through early split injection does not continue effectively till the end of a compression stroke if the early split fuel injection ratio is less than 8 % and vaporization and atomization of a fuel spray provided through the later split fuel injection and mixing with air is hard to be sufficiently accelerated due to the reaction heat and, on the other hand, that a portion of the pre-mixed lean fuel mixture is self-ignited early with an adverse effect of generating what is called reverse operating force if the early split fuel injection ratio is greater than 23 %. These empirical results were the data from a four-cylinder diesel engine of 2,000 cc in displacement that was operated with a full engine load at 1,000 rpm. Further, the total amount of fuel injection through the early split fuel injection and the latter split fuel injection was slightly changed so as to generate a constant amount, i.e. 1.5 Bosch, of smoke (which was measured by Smoke Meter GSM-2 manufactured by Tsukasa-Sokken Company). The air-to-fuel ratio in accordance with the change in the total amount fuel injection was, in terms of excess air ratio (λ), approximately 1.22 (an approximately 3 to 4 % oxygen concentration of the exhaust gas) for an early split fuel injection ratio of 0 %; similarly, approximately 1.2 for an early split fuel injection ratio of 7 %; approximately 1.15 (approximately 2.5 % concentration of oxygen in the exhaust gas) for an early split fuel injection ratio of 11 %; approximately 1.09 for an early split fuel injection ratio of 16 %; approximately 1.01 (approximately 0.2% concentration of oxygen in the exhaust gas) for an early split fuel injection ratio of 21 %; and approximately 1.06 for an early split fuel injection ratio of 26 %.

Thus, in accordance with the experimental results shown in Figure 9, in consideration of engine output characteristics and fuel consumption of the engine 1 with restrained smoke generation, the early split fuel injection is preferable to be from 8 to 23 % and, more preferable to be from 10 to 20 % with more favorable results.

While, in the above embodiment, the intake throttle valve 14 is arranged as an intake control means and is throttled to reduce the amount of intake air that is admitted into the combustion chamber 4 when converging an air-to-fuel ratio around the stoichiometric air-to-fuel ratio, the amount of intake air may be reduced by increasing the amount of exhaust gas recirculation by, for example, opening the exhaust gas recirculation valve 24 when converging an air-to-fuel ratio around the stoichiometric air-to-fuel ratio. Further, in the region of engine operating conditions where supercharging is sufficiently carried out through the turbocharger 25, the amount of intake air may be reduced by controlling the variable vanes 21b of the turbine 21 so as to reduce surcharging efficiency. Otherwise, the amount of intake air may be reduced by simply lowering surcharging pressure by forcing the waste gate (not shown) of the turbocharger 25.

According to the fuel injection control in the embodiment described above, when the level of NOx absorption of the NOx absorbent is determined to have reached the specified level of NOx absorption, an increase in the amount of fuel injection is immediately carried out for correction and the amount of fuel is sprayed through the split fuel injection while the engine 1 operates in the engine operating region of high engine loads. However, fuel injection may be carried out by, after dividing the corrected amount of fuel injection *Qr* into two portions, namely an amount of early split fuel injection *QrL* and an amount of later split fuel injection *QrT* right after commencement of the fuel injection control, carrying out the latter split fuel injection only while cancelling the early split fuel injection and carrying out the early split fuel injection to spray fuel such as to gradually increase the amount of fuel along with a lapse of time, as shown in, for example, Figure 10, until delivering the amount of early split fuel injection *QrL.* In this way, the engine output do not fluctuate since the amount of fuel injection is hardly increased at the beginning of fuel injection control and, thereafter, gradually increase along with a lapse of time following a gradual increase in the amount of early split fuel injection. In consequence, the engine output is smoothly changed when the air-to-fuel ratio is switched, and a natural riding feeling is provided. In addition, right after commencement of the air-to-fuel ratios switching control, an increase in engine output caused by an increase in the amount of fuel injection may be cancelled by retarding the timing of latter fuel injection so as to cause a decrease in engine output. In such a case, the timing of latter injection may be gradually advanced with a lapse of time since commencement of the fuel injection control and returned to the original timing. Further, right after commencement of the air-to-fuel ratios switching control, the engine output may be lowered by gradually decrease the amount of latter split fuel injection. In such a case, the amount of later split fuel injection may be gradually increased with a lapse of time since commencement of the fuel injection control.

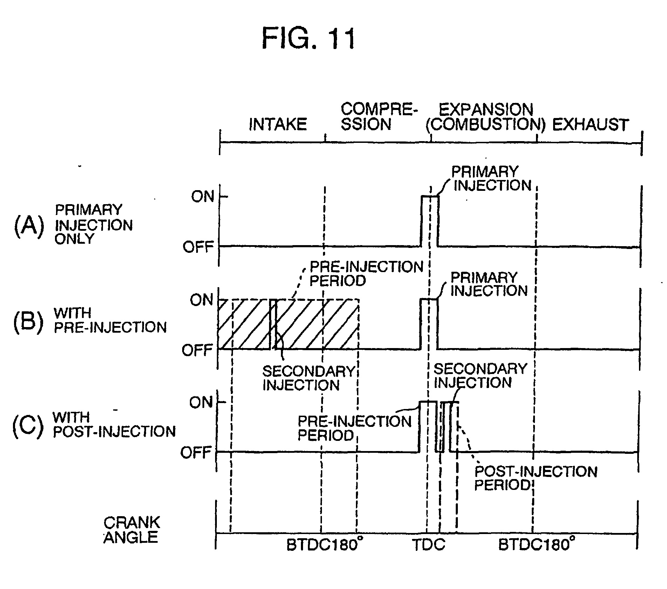

Figures 11A - 11C show a time chart of fuel injection control in accordance with another embodiment. In the following description, since an exhaust gas purifying system 100 is the same in entire structure as that of the previous embodiment shown in Figure 1, the same reference numerals have been used to denote same or similar elements and parts and explanation of these elements and parts are omitted. In the exhaust gas purifying system 100 of this embodiment, when the level of NOx absorption of an NOx absorbent of a catalytic converter 22 has reached a predetermined level and it is therefore assumed that the catalytic converter 22 encounters aggravation of NOx absorbing capacity, while the air-to-fuel ratio in the combustion chamber 4 is switched near to the stoichiometric air-to-fuel ratio as was previously described, fuel injection is divided into primary split fuel injection around the top dead center of a compression stroke and secondary split fuel injection in a period from the beginning of an intake stroke to a first half of an expansion stroke as shown in Figures 11B or 11C. This fuel injection control, which the electronic control unit 35 performs, will be specifically explained below.

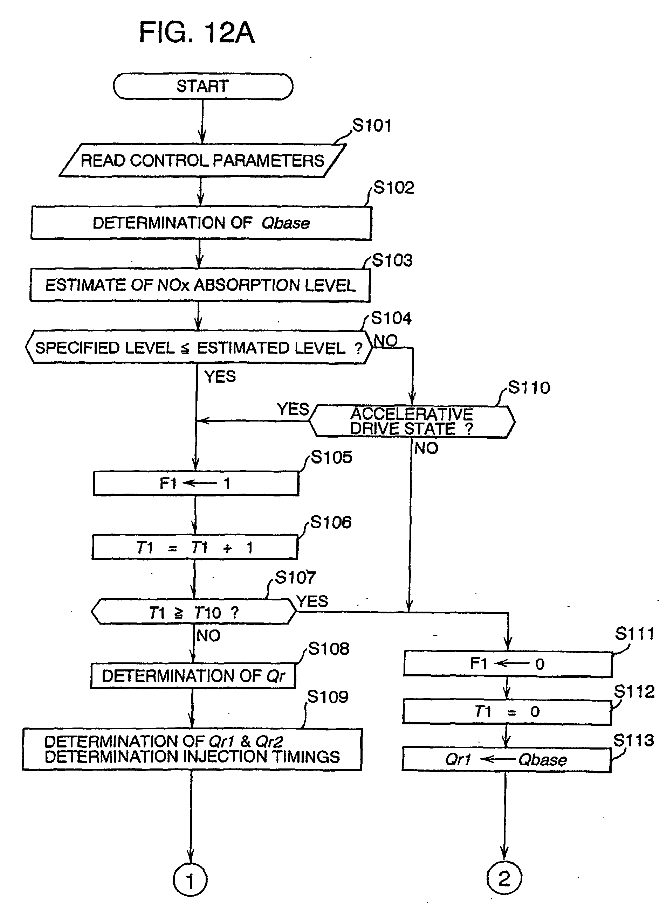

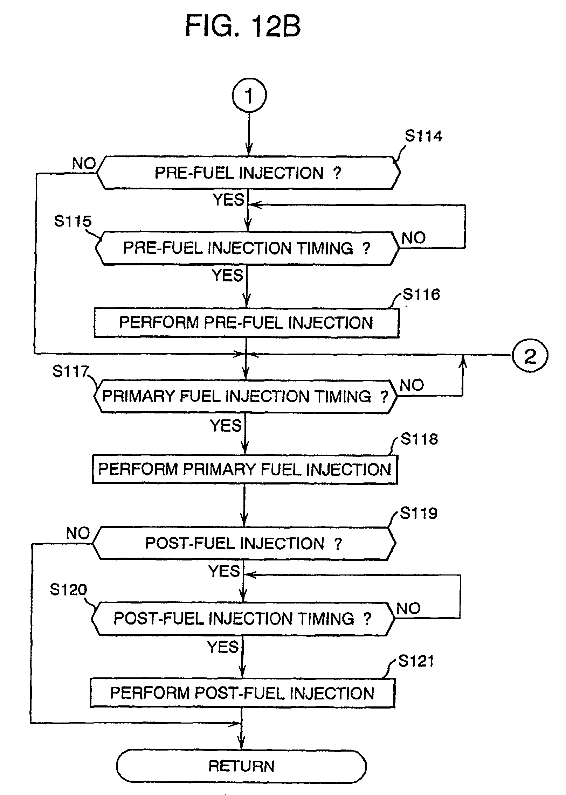

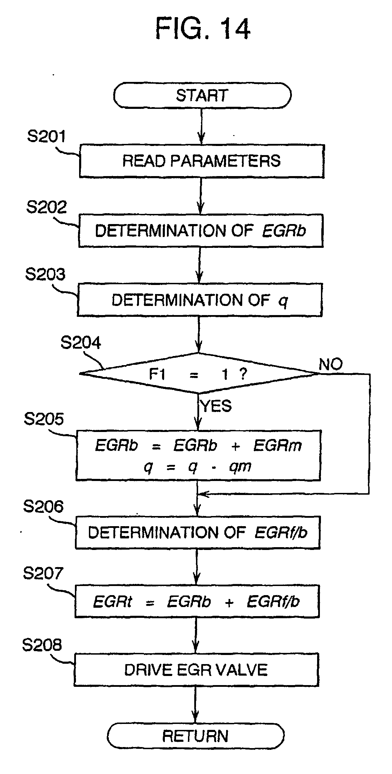

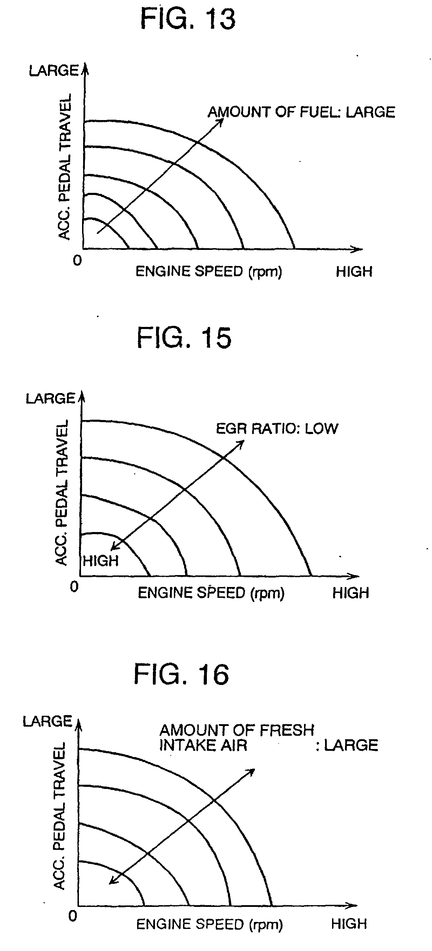

Figures 12A and 12B are a flow chart illustrating a sequence routine of the fuel injection control which is carried out for every predetermined crank angle before an intake stroke independently per cylinder 2 and may be, however, carried out every predetermined period while the engine 1 operates in a normal engine operating region. When the sequence logic commences and control proceeds to blocks at steps S101 to S103 where a basic amount of fuel injection *Qbase* and a basic fuel injection timing are read from maps, respectively, and an estimate of a level of NOx absorption of the NOx absorbent is subsequently made at step S103. The fuel injection map in which an optimum amount of fuel injection Q is empirically defined in accordance with a change in acceleration pedal travel and engine speed as exemplary shown in Figure 13. In this map, the basic amount of fuel injection *Qbase* is defined so as to become larger with an increase in acceleration pedal travel and with an increase in engine speed.

Subsequently, a judgement is made at step S104 as to whether or not the level of NOx absorption of the NOx absorbent of the catalytic converter 22 has reached a specified level. Then, when the level of NOx absorption is still below the specified level, another judgement is made at step S110 as to whether or not the engine 1 is in an accelerative drive state. On the other hand, when the level of NOx absorption has reached the specified level or when the engine 1 is in an accelerative drive state, then, a refresh flag F1 is set up to a state of "1" at step S105. This refresh flag F1 indicates that it is within the refreshing period for releasing absorbed NOx emissions from the NOx absorbent by controlling an air-to-fuel ratio to become on a rich state around the stoichiometric air-to-fuel ratio. After changing a timer count *T1*, which indicates a progress of the refreshing period, by an increment of one at step S106, a judgement is made at step S107 as to whether or not the timer count *T1* has reached a specified timer count *T10*. This specified timer count *T10* corresponds to a time required to release NOx emissions absorbed by the NOx absorbent roughly entirely when an air-to-fuel ratio of exhaust gas has been controlled nearly to the stoichiometric air-to-fuel ratio. The specified timer count *T10* may be corrected in accordance with engine operating conditions such as, for instance, a time for which the engine 1 is continuously operated with a lean fuel mixture and load conditions in which the engine 1 is operated for that time.

When the timer count *T1* has not yet reached the specified timer count *T10* at step S107, in other words, when it is still within the refreshing period, the basic amount of fuel injection *Qbase* is correctively increased and determined as a corrected amount of fuel injection *Qr* so as to deliver an average air-to-fuel ratio in the combustion chamber 4 close to the stoichiometric air-to-fuel ratio at step S108. For example, an amount of fuel injection that delivers an air-to-fuel ratio around the stoichiometric air-to-fuel ratio for an amount of intake air that is detected by the air flow sensor 11 is determined based on the amount of intake air. The corrected amount of fuel injection *Qr* may be empirically determined with respect to engine load that is found based on an accelerator pedal travel and electronically stored in the memory of the electronic control unit 35 in the form of a map.

Thereafter, the corrected amount of fuel injection *Qr* is divided into two portions, an amount of primary fuel injection *Qr1* and an amount of secondary fuel injection *Qr2,* and timings *TQr1* and *TQr2* for these primary and secondary fuel injection are determined at step S109. The primary and secondary fuel injection timings are specifically shown in Figures 11A - 11C by way of example. The timing *TQr1* at which the injector 5 opens to perform the primary fuel injection is advanced more from BTDC 5° CA as a standard timing with an increase in the amount of primary fuel injection *Qr1* and, on the contrary, retarded more with a reduction in the amount of primary fuel injection *Qr1*. In other words, the primary fuel injection is normal primary fuel carried out at an end of a compression stroke (near the top dead center of a compression stroke). On the other hand, the timing *TQr2* at which the injector 5 opens to perform the secondary fuel injection is set to be within either a pre-fuel injection period which is between the beginning of intake stroke and a first half of a compression stroke (between BTDC 350° CA and BTDC 90° CA) as shown in Figure 11B, or a post-fuel injection period which is between the completion of primary fuel injection and a first half of an expansion stroke (between ATDC 15° CA - ATDC 20° CA) as shown in Figure 11C and is further advanced with an increase in engine load and, on the contrary, retarded with a decrease in engine load. In other words, the secondary fuel injection, like the early split fuel injection in the previous embodiment, takes the form of pre-fuel injection that is caused earlier than the primary fuel injection while the engine 1 operates in the engine operating region of higher engine loads and, on the other hand, takes the form of post-fuel injection that is caused after the primary fuel injection when the engine 1 is in the engine operating region of lower engine loads. Moreover, a ratio of the amount of secondary fuel injection *Qr2* relative to the amount of primary fuel injection *Qr1* (which is referred to as a secondary fuel injection ratio) is empirically determined beforehand with respect to engine load and engine speed and electronically stored in the form of a map. When the secondary fuel injection takes the form of pre-fuel injection, the secondary fuel injection ratio is in a range between 8 and 23 %, and changed higher in that range with an increase in engine load. On the other hand, when the secondary fuel injection takes the form of post-fuel injection, the secondary fuel injection ratio is in a range between 30 and 50 %, and changed smaller with an increase in engine load in that range. Thus, when the level of NOₓ absorption of the NOx absorbent reaches the specified level and it is assumed that the catalytic converter 22 encounters aggravation of NOx absorbing capacity in consequence, the amount of fuel injection *Q* is increased for correction such as to deliver an air-to-fuel ratio in the exhaust gas near to the stoichiometric air-to-fuel ratio, thereby refreshing the NOx absorbent. At the same time, the amount of fuel injection is divided into two portions - an amount of primary fuel injection *Qr1* and an amount of secondary fuel injection *Qr2,* so as thereby to restrain generation of smoke. The frequency of fuel injection is not limited to two times, and the primary and secondary fuel injection may be further divided into multiple portions. Further, what is called pilot fuel injection may be made right before execution of the primary fuel injection.

When it is determined that the engine 1 is out of the accelerative drive state as a result of the judgement made at step S110, or when it is determined that the timer count *T1* has reached the specified timer count *T10* as a result of the judgement made at step S107 even when the engine 1 is in the accelerative drive state, after resetting the refresh flag F1 to a state of "0" at step S111 and the timer count *T1* to zero at step S112, the basic amount of fuel injection *Qbase* read at step S102 is employed as the amount of primary fuel injection *Qr1* at step S113. Specifically, while the level of NOx absorption of the NOx absorbent remains below the specified level, the amount of fuel injection is not increased as long as the engine 1 is out of the accelerative drive state and the normal primary fuel injection is simply carried out. Thus, the air-to-fuel ratio in the combustion chamber 4 is placed on a lean side, so as thereby to improve fuel consumption during overall operation of the engine 1. Further, since there occurs a demand for high engine output when the engine 1 operates in the accelerative drive state, while the amount of fuel injection is increased so as to converge an air-to-fuel ratio near to the stoichiometric air-to-fuel ratio with an effect of increasing engine output, refreshing the NOx absorbent is executed. Thus, the NOx absorbing capacity of the NOx absorbent is kept much higher by increasing frequency of refreshing the NOx absorbent. Moreover, when switching the air-to-fuel ratio during a transition from the normal drive state to the accelerative drive state, fluctuations of engine output occurring following a change in air-to-fuel ratio is assumed, so as to preserve a comfortable riding feeling.

Following the determination of the amounts of primary and secondary fuel injection *Qr1* and *Qr2* and timings *TQr1* and *TQr2* for these primary and secondary fuel injection at step S109, a decision is made at step S114 in Figure 12B as to whether or not it is expected to perform pre-fuel injection. When the secondary fuel injection timing *TQr2* has been set within the pre-fuel injection period at step S109, this indicates that it is expected to perform pre-fuel injection, then, another judgement is made at step S115 as to whether or not it has reached the pre-fuel injection timing. This judgement is made based on a crank angle signal. After waiting until the pre-fuel injection timing has come at step S115, the pre-fuel injection is executed at step S116. When it is not expected to perform pre-fuel injection at step S114, or after employing the basic amount of fuel injection *Qbase* as the amount of primary fuel injection *Qr1* at step S113 when it is determined that the engine 1 is out of the accelerative drive state at step S110 or when it is determined that the timer count *T1* has reached the specified timer count *T10* at step S107, or after execution of the pre-fuel injection timing at step S116, another decision is subsequently made at step S117 as to whether or not it is the primary fuel injection timing. This judgement is made based on a crank angle signal. After waiting until the primary fuel injection timing has come at step S117, the primary fuel injection is executed at step S118. Thereafter, a judgement is made at step S119 as to whether it is expected to perform post-fuel injection. When it is expected to perform post-fuel injection, then, another judgement is made at step S120 as to whether or not it has reached the post-fuel injection timing. This judgement is made based on a crank angle signal. After waiting until the post-fuel injection timing has come at step S120, the post-fuel injection is executed at step S121. On the other hand, when it is not expected to perform post-fuel injection at step S119 or when the post-fuel injection has been executed at step S121, the final step orders return for another execution of the fuel injection control routine.

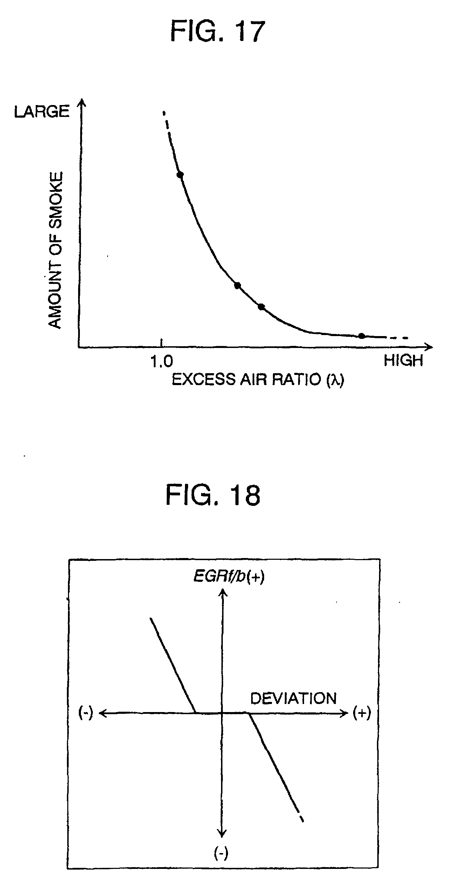

Figure 14 is a flow chart illustrating a sequence routine of exhaust gas recirculation control by the electronic control unit 35 which is periodically repeated. When the sequence logic commences, after reading signals representative of various control parameters including at least a crank angle (CA), the amount of intake air and an accelerator pedal travel at step S201, a basic exhaust gas recirculation ratio *EGRb* is read from an exhaust gas recirculation control map in accordance with the accelerator pedal travel and an engine speed found from the crank angle at step S202. This exhaust gas recirculation control map, as shown in Figure 15 by way of example, defines appropriate exhaust gas recirculation ratios that have been empirically determined with respect to accelerator pedal travel and engine speed and electronically stored in the memory of the electronic control unit 35. The basic exhaust gas recirculation ratios *EGRb* is defined so as to become larger with a decrease in accelerator pedal travel and/or with a decrease in engine speed. Subsequently, a target amount of intake air *q* is read from an intake air control map in accordance with the accelerator pedal travel and the engine speed at step S203. The amount of fresh intake air refers to the amount of air introduced into the combustion chamber 4, excluding the amount of exhaust gas that is recirculated, and is detected by the air flow sensor 11. The intake air control map, as shown in Figure 16 by way of example, defines appropriate amounts of intake air that have been empirically determined with respect to accelerator pedal travel and engine speed and electronically stored in the memory of the electronic control unit 35. The amount of intake air *q* is defined so as to become larger with an increase in accelerator pedal travel and/or with an increase in engine speed. The exhaust gas recirculation ratio refers to a ratio of an amount of exhaust gas that is recirculated relative to a total amount of are that is introduced into the combustion chamber 4. Also, typically in a direct injection-spark ignition type of diesel engine, while the generation of NOx emissions can be restrained more effectively as an air-to-fuel ratio in the combustion chamber 4 is made smaller by increasing the amount of exhaust gas recirculation, however, on the contrary, as shown by way of example in Figure 18, smoke sharply increases when the air-to-fuel ratio become too small. Therefore, the basic exhaust gas recirculation ratio *EGRb* and the target amount of intake air *q* determined at steps S202 and S203, respectively, are set so as to keep an air-to-fuel ratio in the combustion chamber 4 of the engine 2 as small as possible within a range where no sharp increase in the amount of smoke is caused.

Subsequently, at step S204, a judgement is made as to whether or not the refresh flag F1 that has been set during the fuel injection control is up. When the refresh flag F1 is up, the basic exhaust gas recirculation ratio *EGRb* and the target amount of intake air *q* are corrected in accordance with an engine load, respectively, so as to make an air-to-fuel ratio in the combustion chamber 4 change smaller i.e. become toward a rich side at step S205. Specifically, a correction value of exhaust gas recirculation ratio *EGRm* is read from an exhaust gas recirculation correction map and is added to the basic exhaust gas recirculation ratio *EGRb.* Similarly, an correction amount of intake air *qm* is read from a intake air correction map and is deducted from the target amount of intake air *q*. Although these exhaust gas recirculation correction map and intake air correction map are not shown, they deine appropriate correction values, respectively, that have been empirically determined with respect to engine loads and electronically stored in the memory of the electronic control unit 35. Both correction values *EGRm* and *qm* are determined so as to become smaller with an increase in engine load. The corrections of target exhaust gas recirculation ratio *EGRb* is set so as not to cause a too large increase in the amount of exhaust gas recirculation which leads to accidental fire.

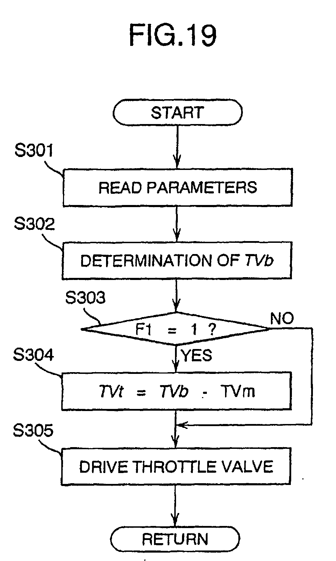

After the corrections of the basic exhaust gas recirculation ratio *EGRb* and the target amount of air *q* at step S205 or when it is determined that the refresh flag F1 is down at step S204, a correction value of exhaust gas recirculation ratio *EGRf*/*b* that is necessary to feedback control an exhaust gas recirculation ratio is read an exhaust gas recirculation control map such as shown in Figure 19 by way of example in accordance with a deviation of the amount of fresh intake air detected by the air flow censor 11 from the corrected target amount of intake air *q* at step S206. The exhaust gas recirculation control map defines an appropriate correction value of exhaust gas recirculation ratio *EGRf*/*b* that have been empirically determined with respect to deviations between the amount of fresh intake air and the corrected target amount of intake air and electronically stored in the memory of the electronic control unit 35. The correction value of exhaust gas recirculation ratio *EGRf*/*b* is defined so as to become smaller with an increase in deviation between the amount of fresh intake air and the corrected target amount of intake air when the amount of fresh intake air is larger than the corrected target amount of intake air and to become larger with an increase in deviation between the amount of fresh intake air and the corrected target amount of intake air when the amount of fresh intake air is smaller than the corrected target amount of intake air. However, there is provided a dead zone at a section where the target amount of intake air is close to the amount of fresh intake air.

At step S207, a target exhaust gas recirculation ratio *EGRt* is determined by adding the correction value of exhaust gas recirculation ratio *EGRf*/*b* to the basic exhaust gas recirculation ratio *EGRb.* Subsequently, a control signal is output to actuate the electromagnetic valve 28 so as thereby to control negative pressure and drive the exhaust gas recirculation valve 24 according to the target exhaust gas recirculation ratio *EGRt* at step S208, and then, the final step orders return for another execution of the exhaust gas recirculation control routine. In the exhaust gas recirculation control, the feedback control through steps S206 and S207 may be not always carried out.

With the exhaust gas recirculation control, the exhaust gas recirculation valve 24 is controlled to open so as to make an exhaust gas recirculation ratio larger while the refresh flag F1 is up, i.e. within the refreshing period for refreshing the NOx absorbent of the catalytic converter 22 than while it is out of the refreshing period. Further, the target amount of fresh intake air is reduced in correspondence to a decrease in the amount of intake air occurring accompanying the change in exhaust gas recirculation ratio. In consequence, the air-to-fuel ratio in the combustion chamber 4 of each cylinder become smaller, that is to say, it changes toward a rich side, so as to converge approximately at the stoichiometric air-to-fuel ratio without increasing the amount of fuel injection so much during the fuel injection control. Further, the decrease in the amount of intake air causes a drop in engine output, so that an increase in engine output that is caused by an increase in the amount of fuel injection is cancelled, as a result of which fluctuations of engine output are reduced. In addition, admitting exhaust gas into the combustion chamber 4 makes fuel combustion appropriately slow, so as to promote mixing fuel with air and vaporization and atomization of the fuel mixture with an effect of improving combustibility of the fuel mixture and controlling generation of smoke in consequence as well as controlling the level of NOx emissions.

The exhaust gas recirculation control may be done by detecting an air-to-fuel ratio by a linear O₂ sensor that is installed in the exhaust passage 20 and feedback controlling the air-to-fuel ratio so as to converge at a target air-to-fuel ratio.

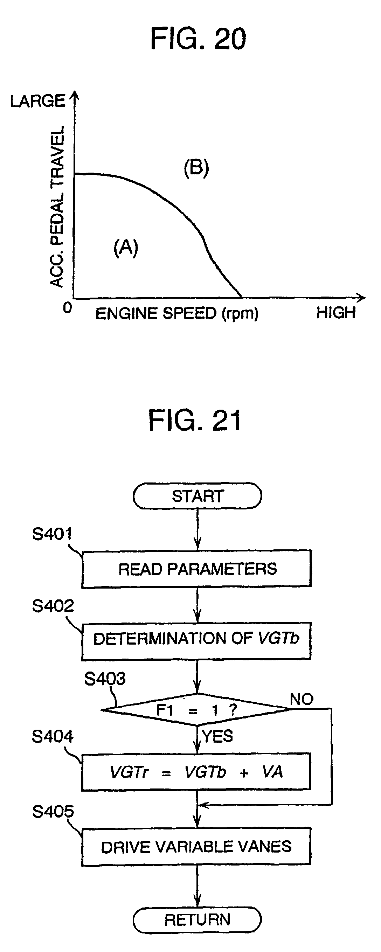

Figure 19 is a flow chart illustrating a sequence routine of intake throttle valve control which is periodically repeated. When the sequence logic commences, after reading signals representative of various control parameters including at least a crank angle (CA), the amount of fresh intake air and an accelerator pedal travel at step S301, a basic intake throttle valve opening or lift *TVb* is read from a throttle valve control map in accordance with engine operating conditions, namely the accelerator pedal travel and an engine speed found from the crank angle, at step S302. The throttle valve control map, as shown in Figure 20 by way of example, defines intake throttle valve lift *TVb* in accordance with engine operating conditions that are divided into two regions, namely a low load- low-engine speed region (A) and a high load-high engine speed region (B) and that have been empirically determined and electronically stored in the memory of the electronic control unit 35. The basic intake throttle valve lift *TVb* is defined to be relatively smaller in the low load-low engine speed region (A) than in the high load-high engine speed region (B). This is for the reason of securing a sufficient amount of exhaust gas recirculation through the exhaust gas recirculation passage 24 by increasing negative pressure (lowering intake pressure) by closing the intake throttle valve 14 even in the low load-low engine speed region where intake negative pressure is essentially low.

Subsequently, a judgement is made at step S303 as to whether or not the refresh flag F1 is up. When the refresh flag remains up (F1 = 1), this indicates that it is within the refreshing period, then a target intake throttle valve opening or lift *TVt* is determined by deducting a correction value *TVm* from the basic intake throttle valve opening *TVb* at this step S304, and a control signal corresponding to the target intake throttle valve lift *TVt* is output to the electromagnetic valve 14 to drive the intake throttle valve 14 until attaining the target intake throttle valve lift *TVt* at step *S305.* On the other hand, when the refresh flag F1 is reset down (F1 = 0), this indicates that it is out of the refreshing period, then, the electromagnetic valve 14 drives the intake throttle valve 14 until the basic intake throttle valve lift *TVb* at step S305, and then, the final step orders return for another execution of the intake throttle valve control routine.

That is to say, during the refreshing period in which the refresh flag F1 remains up and the NOx absorbent of the catalytic converter 22 is to be refreshed, the intake throttle valve lift *TVb* is made smaller with the result of reducing the amount of fresh intake air as compared with during a period other than the refreshing period. As a result, intake negative pressure rises, so as to provide an increase in the amount of exhaust gas that is recirculated through the exhaust gas recirculation passage 24 with an effect of causing a further reduction in the amount of fresh intake air. Then, the same effect as that of the exhaust gas recirculation control is obtained resulting from the decrease in the amount of intake air, so as to reduce fluctuations of engine output accompanying the switch of air-to-fuel ratio.

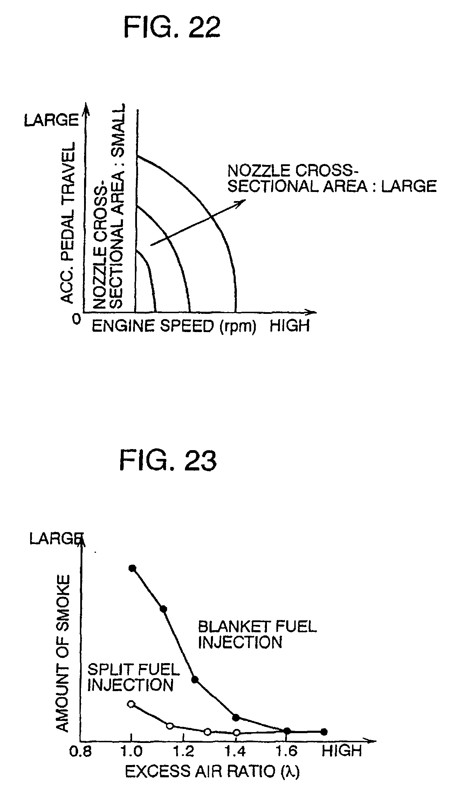

Figure 21 is a flow chart illustrating a sequence routine of variable geometric turbocharger control which is periodically repeated. When the sequence logic commences, after reading signals representative of various control parameters including at least a crank angle (CA), intake pressure, the amount of fresh intake air and an accelerator pedal travel at step S401, a basic nozzle cross-sectional area *VGTb* is read from a variable geometric turbocharger control map in accordance with engine operating conditions, namely the accelerator pedal travel and an engine speed found from the crank angle, at step S402. The variable geometric turbocharger control map, as shown in Figure 22 by way of example, defines basic nozzle cross-sectional area *VGTb* in accordance with engine operating conditions that are divided into two regions and that have been empirically determined and electronically stored in the memory of the electronic control unit 35. The basic nozzle cross-sectional area *VGTb* is defined to become larger with an increase in accelerator pedal travel and/or an increase in engine speed. This provides an increase in exhaust gas velocity with an effect of improving supercharging efficiency.

Subsequently, a judgement is made at step S403 as to whether or not the refresh flag F1 is up. When the refresh flag remains up (F1 = 1), this indicates that it is within the refreshing period, then a target nozzle cross-sectional area *VGTr* is determined by adding a correction value *VA* to the basic nozzle cross-sectional area *VGTb* at this step S404, and a control signal corresponding to the target intake throttle valve lift *TVt* is output to the electromagnetic valve 31 to drive the variable vanes 21b of the turbine 21 until attaining the target nozzle cross-sectional area *VGTr* at step S405. On the other hand, when the refresh flag F1 is reset down (F1 = 0), this indicates that it is out of the refreshing period, then, the electromagnetic valve 31 drives the variable vanes 21b of the turbine 21 until attaining the basic nozzle cross-sectional area *VGTb* step S405, and then, the final step orders return for another execution of the variable geometric turbocharger control routine.

In other words, during the refreshing period in which the refresh flag F1 remains up and the NOx absorbent of the catalytic converter 22 is to be refreshed, the nozzle cross-sectional area *VGTb* is made larger with the result of reducing the supercharging ability as compared with during a period other than the refreshing period. As a result, there occurs a reduction in supercharging efficiency which causes a reduction in the amount of fresh intake air. Thus, the same effect as those of the exhaust gas recirculation control and the intake throttle valve control is attained, so as to reduce fluctuations of engine output accompanying the switch of air-to-fuel ratio.

Even in the second embodiment like in the first embodiment, a basic amount of fuel *Qbase* is ordinarily sprayed through blanket injection from the injector 5 at the end of a compression stroke of each cylinder 2 as shown in Figure 11(A) during engine operation, and the air-fuel mixture is burnt in the combustion chamber 4 of each cylinder with an air-to-fuel ratio on a lean side. NOx emissions generating due to the combustion of such a lean air-fuel mixture is absorbed by the NOx absorbent of the catalyst converter 22. On the other hand, when the level of NOx absorption of the NOx absorbent becomes as high as it exceeds the specified level of NOx absorption, the fuel injection control is made to provide an increase in the amount of fuel so as to converge an air-to-fuel ratio in the combustion chamber 4 near to the stoichiometric air-to-fuel ratio. In other words, while the basic amount of fuel *Qbase* is increased up to a corrected amount of fuel *Qr*, the amount of intake air is reduced through the exhaust gas recirculation control, the intake throttle valve control and the variable geometric turbocharger control. At the same time, when the engine 1 operates in the high load region, fuel injection is divided into two parts - pre-fuel injection and primary fuel injection - as shown in Figure 11 (B), as a result of which, the same effect as that in the first embodiment is obtained. Further, when the engine 1 operates in the low load region, fuel injection is divided into two parts - primary fuel injection and post-fuel injection right after completion of the primary fuel injection - as shown in Figure 11 (C). Then, the post-fuel injection is carried out right after the primary fuel injection, so as to deliver fuel into the combustion chamber 4 at extremely high temperature and pressure, as a result of which the fuel spray is rapidly vaporized and atomized and the most part of the fuel is completely burnt and, in consequence, generation of smoke by which the incomplete combustion of fuel is accompanied is restrained. Moreover, comparing with the case where the post-fuel injection is carried out from an expansion stroke to an exhaust stroke as conventionally, the amount of unburnt fuel discharged from the combustion chamber 4 is significantly reduced. In particular, since there is a demand for low engine output and a low total amount of fuel to be sprayed in the low load region, there is no occurrence of a rapid increase in the amount of smoke nor sharp aggravation of fuel consumption even when controlling an air-to-fuel ratio in the combustion chamber 4 to converge around the stoichiometric air-to-fuel ratio.

Figure 23 shows an experimental result of a comparison test of the amount of smoke relative to excess air ratio between split fuel injection involving primary fuel injection and post-fuel injection and blanket fuel injection comprising primary fuel injection. The empirical result was the data from a four-cylinder diesel engine of 2,000 cc in displacement that was operated at 1,500 rpm in the low engine load region. Further, the total amount of fuel to be sprayed was divided into two equal parts for the primary fuel injection and the post-fuel injection made at timings fixed to BTDC 5° CA and ATDC 20° CA, respectively. As apparent from Figure 23, it is revealed that, in connection with the blanket fuel injection, the amount of smoke significantly lowers when an average excess air ratio (λ) in the combustion chamber 4 is greater than 1.6 and, however, sharply increases as the excess air ratio (λ) gradually lowers from 1.6. It is demonstrated that smoke generates twice as much as generating at average excess air ratios (λ) greater than 1.6 when an average excess air ratio (λ) is one (1), i.e. at the stoichiometric air-to-fuel ratio. On the contrary, in connection with the split fuel injection, the amount of smoke generated at an average excess air ratio (λ) of 1.2 or between 1.2 and 1.6 is almost the same as that at an average excess air ratio (λ) greater than 1.6, and smoke remains sufficiently less in amount even at an average excess air ratios (λ) of one (1). Particularly at an excess air ratio (λ) of one (1), the amount of smoke generating during the split fuel injection is less than approximately the quarter the amount of smoke that generates during the blanket fuel injection, From the result of this assessment, it is understood that generation of smoke is significantly restrained by spraying fuel through the split fuel injection. Thus, the fuel injection control system according to the second embodiment controls an air-to-fuel ratio in the combustion chamber 4 to converge around the stoichiometric air-to-fuel ratio without accompanying a sharp quantitative increase of smoke and remarkable aggravation of fuel consumption and, in consequence, refreshes the NOx absorbent even while the engine 1 operates in the low engine load region, so as to can be refreshed. Moreover, the post-fuel injection provides an increase in unburnt HC and CO emissions in exhaust gas which react with NOx emissions, as a result of which NOx emissions are reduced, so as to promote releasing NOx emissions from the NOx absorbent, thereby quickly refreshing the NOx absorbent. Similarly to the first embodiment, refreshing the NOx absorbent is carried out only when the NOx absorbent is expected to have lowered its NOx absorption ability due to having absorbed NOx emissions in excess, fuel consumption is improved for the overall period of operation of the engine 1. It may be done without estimating a level of NOx absorption of the NOx absorbent to periodically control an air-to-fuel ratio in the combustion chamber 4 so as to converge around the stoichiometric air-to-fuel ratio.

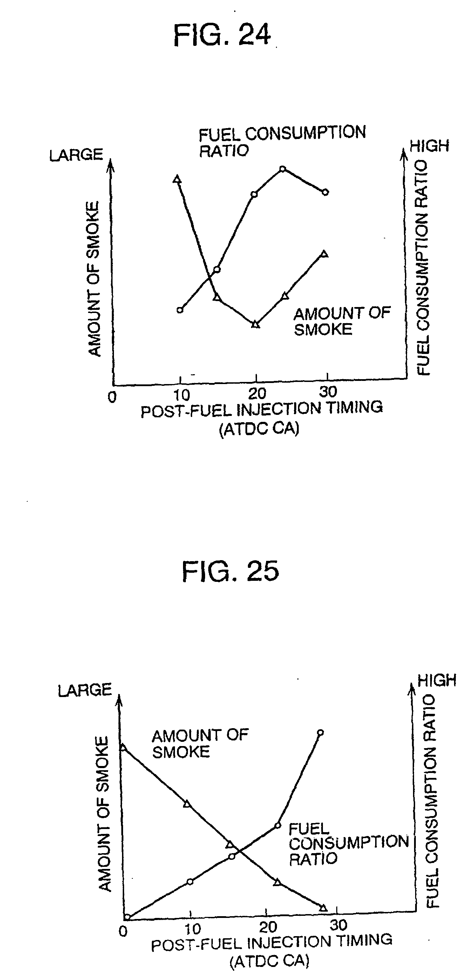

Figure 24 shows an experimental result of a test of the amount of smoke and fuel consumption ratio relative to post-fuel injection timing. The empirical result was the data from a four-cylinder diesel engine of 2,000 cc in displacement that was operated with a specified low engine load at 1,500 rpm. Further, while the total amount of fuel was determined so as to cause an air-to-fuel ratio to converge around the stoichiometric air-to-fuel ratio, it was divided into two equal parts for the primary fuel injection and the post-fuel injection made at timings fixed to BTDC 5° CA and ATDC from 10° to 30° CA, respectively. As clearly understood from Figure 24, the amount of smoke shows a drastic reduction when the post-injection is carried out in the crank angle range of ATDC 15° to ATDC 25° CA. However, in this crank angle range, fuel consumption aggravates more as the post-fuel injection timing retards. Accordingly, it is revealed that, if fuel consumption is given priority, the post-fuel injection timing is preferred to be advanced. In the light of the object of the present invention that while controlling an air-to-fuel ratio in the combustion chamber 4 to converge around the stoichiometric air-to-fuel ratio, both an increase in the amount of smoke at the air-to-fuel ratio and aggravation of fuel consumption are restrained, the post-fuel injection timing is considered to be especially preferable to be between ATDC 15° CA to ATDC 20° CA.

Figure 25 shows an experimental result of a test of the amount of smoke and fuel consumption ratio relative to post-fuel injection ratio which refers to the ratio of the amount of fuel injection through post-fuel injection relative to the amount of fuel injection through primary fuel injection. The empirical result was the data from a four-cylinder diesel engine of 2,000 cc in displacement that was operated with a specified low engine load at 1,500 rpm and the primary fuel injection and the post-fuel injection were made at timings fixed to BTDC 5° CA and ATDC 20° CA, respectively. Measurements were made for various post-fuel injection ratios between 0 and 70 %. As clearly understood from Figure 25, the best fuel consumption is gained when the post-fuel injection ratio is 0 %, in other words, when the entire amount of fuel is sprayed through the primary fuel injection all at once and, however, the amount of smoke is too large for the best fuel consumption as shown in Figure 24. Further, as the post-fuel injection ratio gradually increases from 0%, the amount of smoke approximately linearly decreases correspondingly to a change in post-fuel injection ratio and, on the contrarily, the fuel consumption ratio gradually increase at a change rate that sharply increases at a post-fuel injection ratio exceeding approximately 50 %. It is revealed in the assessment that the post-fuel injection ratio is preferred to be less than 50%. As a result, in the light of restraining both an increase in the amount of smoke and aggravation of fuel consumption, the post-fuel injection ratio is preferred to be between approximately 30 and 50 %.

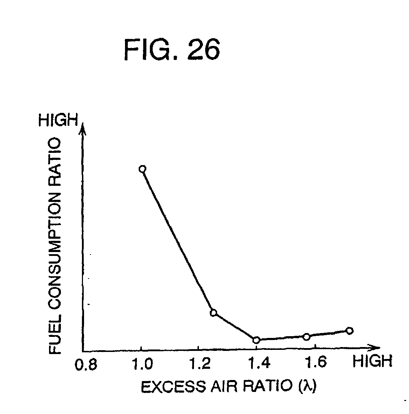

Figure 26 shows an experimental result of a test of a change in fuel consumption ratio relative to a change in excess air ratio. The test was made by dividing the total amount of fuel injection into two equal parts for the primary fuel injection and the post-fuel injection made at timings fixed to BTDC 5° CA and ATDC 20° CA, respectively. Measurements were made for various total amounts of fuel injection which provides excess air ratios (λ) between 1 and 1.7. As clearly understood from Figure 26, the fuel consumption ratio experiences sharp aggravation as the excess air factor (λ) reaches 1.4 and becomes lower below it. Thus, in the light of restraining aggravation of the fuel consumption ratio, it is preferable to control an air-to-fuel ratio in the combustion chamber 4 to a ratio as high as possible on a lean side even though controlling it so as to converge around the stoichiometric air-to-fuel ratio. In the second embodiment, during refreshing the NOx absorbent of the catalyst converter 22, while controlling an air-to-fuel ratio in the combustion chamber 4 to converge around the stoichiometric air-to-fuel ratio, the amount of fuel is divided into two parts, on one hand, for pre-fuel injection and primary fuel injection when the engine 1 operates in the high engine load region and, on the other hand, for primary fuel and post-fuel injection when the engine 1 operates in the low engine load region. However, it may be done to divide fuel injection into two split fuel injection - primary fuel injection and post-fuel injection - while controlling an air-to-fuel ratio in the combustion chamber 4 to converge around the stoichiometric air-to-fuel ratio only when the engine 1 operates in the low engine load region. Further, although an air-to-fuel ratios in the combustion chamber 4 is controlled to converge around the stoichiometric air-to-fuel ratio in all of the four cylinders 2 of the engine 1 during refreshing the NOx absorbent of the catalyst converter 22, the control air-to-fuel ratio toward the stoichiometric air-to-fuel ratio and the split fuel injection may be done in some cylinders 2 only.

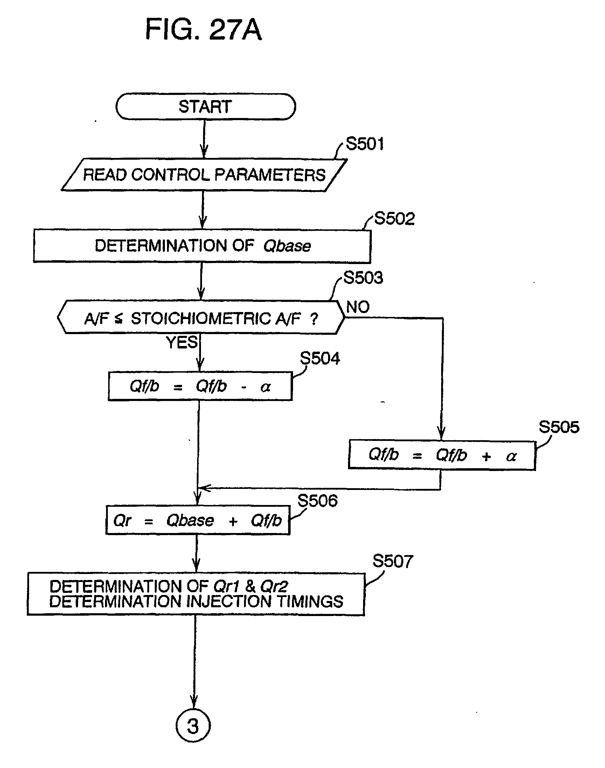

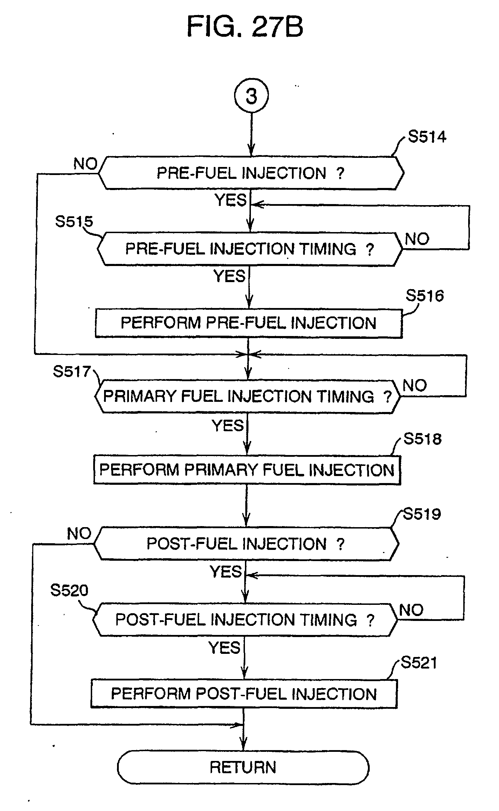

Figures 27A and 27B show a flow chart illustrating a sequence routine of fuel injection control in accordance with another embodiment of the invention. Since the entire structure of the exhaust gas purifying system 100 for a diesel engine relating to this embodiment is the same as that of the first embodiment shown in Figure 1, a detailed description of the third embodiment is omitted by using the same reference numerals to refer to same or similar parts. In the third embodiment, the exhaust gas purifying system 100 employs a three-way catalytic converter 22, which carries a noble metal or noble metals such as platinum, rhodium and the like on alumina or the like, installed the exhaust passage 20 of the diesel engine 1 and while controlling an air-to-fuel ratio in the combustion chamber 4 toward the stoichiometric air-to-fuel ratio over the entire region of ordinary engine operating conditions, fuel injection is performed through two parts - primary fuel injection and secondary fuel injection - in the same manner as in the second embodiment. Fuel injection control is performed independently by cylinder every specified crank angle (CA) before an intake stroke. When the sequence logic commences, after reading signals representative of various control parameters including at least a crank angle (CA), the amount of fresh intake air, an accelerator pedal travel and oxygen concentration at step S501, a basic amount of fuel injection *Qbase* is determined with reference to a fuel injection control map in accordance with the accelerator pedal travel and an engine speed found from the crank angle and, at the same time, an fuel injection timing is determined with reference to another fuel injection control map in accordance with the accelerator pedal travel and the engine speed. Subsequently, a judgement is made at step S503 as to whether or not an air-to-fuel ratio in the combustion chamber 4 is equal to or lower than the stoichiometric air-to-fuel ratio, which judgement is practically made on the basis of oxygen concentration represented by an output signal from the O₂ sensor 17. When the air-to-fuel ratio is equal to or lower than the stoichiometric air-to-fuel ratio, a correction amount of fuel injection *Qf*/*b* that is necessary to feedback control an air-to-fuel ratio is determined by deducting a specified value *α* from the previous correction amount of fuel injection *Qf*/*b* at step S504. On the other hand, when the air-to-fuel ratios are larger than the stoichiometric air-to-fuel ratio, a correction amount of fuel injection *Qf*/*b* is determined by adding the specified value α to the previous correction amount of fuel injection *Qf*/*b* at step S505. After having determined the correction amount of fuel injection *Qf*/*b* at step S504 or S505, an amount of fuel injection *Qr* that is to be sprayed is determined by adding the correction amount of fuel injection *Qf*/*b* to the basic amount of fuel injection *Qbase* at step S506 and amounts of fuel *Qr1* and *Qr2* for primary fuel injection and secondary fuel injection, respectively, into which the amount of fuel injection *Qr* is divided and timings *TQr1* and *TQr2* for these primary fuel injection and secondary fuel injection are determined at step S507 in the same manner as in the first embodiment shown in Figure 12A. Subsequently, the control proceeds to steps S508 through S515 in Figure 27B which are correspond to steps S114 through S121 in the second embodiment shown in Figure 12B, respectively. That is, a decision is made at step S508 as to whether or not it is expected to perform pre-fuel injection. When it is expected to perform pre-fuel injection, then, another judgement is made at step S509 as to whether or not it has reached the pre-fuel injection timing. After waiting until the pre-fuel injection timing has come at step S509, the pre-fuel injection is executed at step S510. When it is not expected to perform pre-fuel injection at step S508 or after having performed pre-fuel injection at step S510, another decision is subsequently made at step S511 as to whether or not it is the primary fuel injection timing. After waiting until the primary fuel injection timing has come at step S511, the primary fuel injection is executed at step S512. Thereafter, a further judgement is made at step S513 as to whether it is expected to perform post-fuel injection. When it is expected to perform post-fuel injection, then, after waiting until the post-fuel injection timing has come at step S514, the post-fuel injection is executed at step S515. When it is not expected to perform post-fuel injection at step S513 or when the post-fuel injection has been executed at step S515, the sequence logic returns for another execution of the fuel injection control routine.

In the fuel injection control, while an air-to-fuel ratio in the combustion chamber 4 of each cylinder 2 is feedback-controlled to converge around the stoichiometric air-to-fuel ratio on the basis of an output signal from the O₂ sensor 17 installed in the exhaust passage 20 during operation of the diesel engine 1, the amount of fuel is divided into two parts that are sprayed through two split fuel injection by the injector 5 by cylinder.

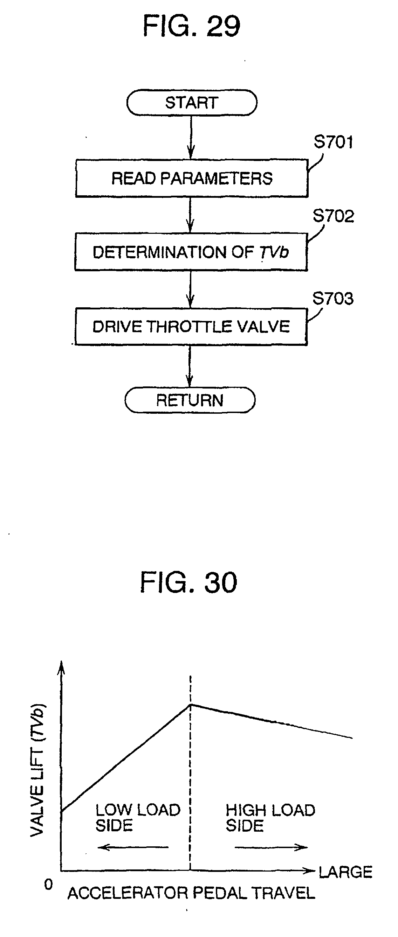

Figure 29 is a flow chart illustrating a sequence routine of exhaust gas recirculation control which is periodically repeated. When the sequence logic commences, after reading signals representative of various control parameters including at least a crank angle (CA), the amount of intake air and an accelerator pedal travel at step S601, a basic exhaust gas recirculation ratio *EGRb* is read from a basic exhaust gas recirculation control map in accordance with the accelerator pedal travel and an engine speed found from the crank angle at step S602 and a target amount of intake air *q* is subsequently read from an intake air control map in accordance with the accelerator pedal travel and the engine speed at step S603. Although these control maps are similar to those shown in Figures 15 and 16, the basic exhaust gas recirculation ratio *EGRb* is defined so as to cause an air-to-fuel ratio to converge at the stoichiometric air-to-fuel ratio more easily as compared with the target amount of intake air *q*. A correction value of exhaust gas recirculation ratio *EGRf*/*b* is read from an exhaust gas recirculation ratio control map at step S604 and a target exhaust gas recirculation ratio *EGRt* is subsequently determined by adding the correction value of exhaust gas recirculation ratio *EGRf*/*b* to the basic exhaust gas recirculation ratio *EGRb* at step S605. At step S606, a control signal is output to actuate the electromagnetic valve 28 so as thereby to drive the exhaust gas recirculation valve 24 according to the target exhaust gas recirculation ratio *EGRt,* and then, the final step orders return for another execution of the exhaust gas recirculation control routine.

As described above, the target exhaust gas recirculation ratio *EGRt* is determined by feedback controlling and correcting a basic exhaust gas recirculation ratio *EGRb* on the basis of deviation between an actual amount of fresh intake air which is found from an output signal from the air flow sensor 11 and an target amount of fresh intake air *q*, and the exhaust gas recirculation valve 24 is driven so as to attain the target exhaust gas recirculation ratio *EGRt.*

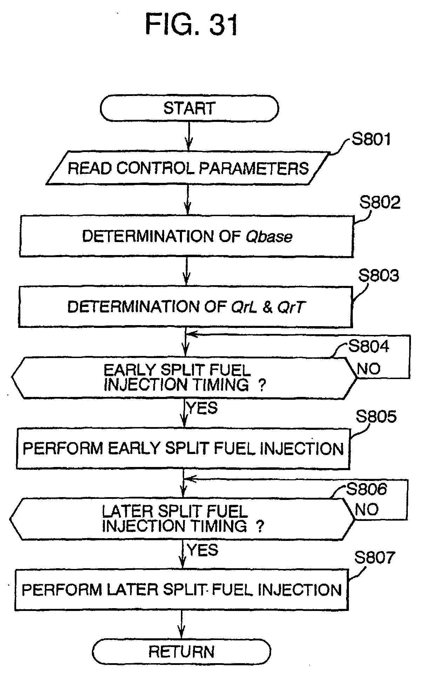

Figure 30 is a flow chart illustrating a sequence routine of intake throttle valve control which is periodically repeated. When the sequence logic commences, after reading signals representative of various control parameters including at least a crank angle (CA), the amount of fresh intake air and an accelerator pedal travel at step S701, a basic intake throttle valve opening or lift *TVb* is read from a throttle valve control map such as shown in Figure 31 in accordance with engine operating conditions at step S702. Specifically, the throttle valve control map defines intake throttle valve lift *TVb* in accordance with accelerator pedal travels that are divided into two regions, i.e. a small accelerator pedal travel region and a large accelerator pedal travel region and that have been empirically determined and electronically stored in the memory of the electronic control unit 35. The basic intake throttle valve lift *TVb* is defined so as to become smaller with a decrease in accelerator pedal travel in the small accelerator pedal travel region, thereby decreasing the amount of fresh intake air with an effect of making an air-to-fuel ratio easily converge at the stoichiometric air-to-fuel ratio, and, on the other hand, to become some what lower with an increase in accelerator pedal travel in the large accelerator pedal travel region, thereby increasing intake pressure with an effect of admitting exhaust gas sufficiently into an intake air stream.

At step S603, a control signal corresponding to the basic intake throttle valve lift *TVb* is output to the electromagnetic valve 14 to drive the intake throttle valve 14 until attaining the basic intake throttle valve lift *TVb* and then, the final step orders return for another execution of the intake throttle valve control routine.

In the intake throttle valve control, an air-to-fuel ratio in the combustion chamber 4 is controlled to converge around the stoichiometric air-to-fuel ratio during operation of the diesel engine 1, so that the three-way catalytic converter in the exhaust passage 20 effectively lowers levels of HC, CO and NOx emissions in exhaust gas to purify the exhaust gas while an air-to-fuel ratio in the exhaust gas becomes close to the stoichiometric air-to-fuel ratio. Further, the amount of fuel that is to be sprayed is divided into two parts for split fuel injection, so as to prevent generation of a large amount of smoke even when the stoichiometric air-to-fuel ratio is attained in the combustion chamber 4. In other words, the three-way catalytic converter purifies exhaust gases without being accompanied by an increase in the amount of smoke in the exhaust gases.

The exhaust gas purifying system 100 of the present invention is not limited to the embodiments described above, and may include other variants and embodiments. For example, although, in the respective embodiments, the exhaust gas purifying system 100 is applied to a diesel engine, it may be applied as a fuel injection system for a direct injection-spark ignition type of diesel engine and a direct injection-spark ignition type of gasoline engine.

In the exhaust gas purifying system 100 in which a three-way catalytic converter 22 is installed in the exhaust passage 20 of the diesel engine 1, while adapting the diesel engine 1 to operate normally in the high engine load region and controlling an air-to-fuel ratio in the combustion chamber 4 of the diese engine 1 to converge around the stoichiometric air-to-fuel ratio, the amount of fuel to be sprayed may be divided into two parts for early split fuel injection and latter split fuel injection as shown in Figure 32.

Referring to Figure 32 showing a flow chart illustrating a sequence routine of fuel injection control which is periodically performed, when the sequence logic commences and control proceeds directly to a block at step S701 where various control parameters including at least a crank angle (CA), oxygen concentration, an amount of fresh intake air, an accelerator pedal travel. Subsequently, an amount of fuel injection *Qr*, which delivers an air-to-fuel ratio near the stoichiometric air-to-fuel ratio, is determined on a fuel injection control map in accordance with target engine output torque which is determined on the basis of the accelerator pedal travel and an engine speed which is found from the crank angle at step S702, and the amount of fuel injection *Qr* is divided into two parts, namely an amount of early split fuel injection *QrL* and an amount of later split fuel injection *QrT* at step S703. After waiting until an early split fuel injection timing is reached at step S704, the early split fuel injection is executed to spray the amount of fuel *QrL* at step S705. Similarly, after waiting until a later split fuel injection timing is reached at step S706, the later split fuel injection is executed to spray the amount of fuel *QrT* at step S705.

According to the fuel injection control described above, the diesel engine 1 is enabled to operate at an approximately stoichiometric air-to-fuel ratio without increasing the amount of smoke in exhaust gas. Similarly to the third embodiment, HC, CO and NOx emissions in exhaust gas are significantly effectively lowered in level by the three-way catalytic converter installed in the exhaust passage 20. Further, in the respective embodiments previously described, although the exhaust gas purifying system 100 is adapted to cause the catalyst converter 22 to release NOx emissions from the NOx absorbent by the aid of controlling an air-to-fuel ratio in the combustion chamber 4 to converge near to the stoichiometric air-to-fuel ratio, it may be done to control an air-to-fuel ratio in the combustion chamber 4 to be lower (on a rich side) than the stoichiometric air-to-fuel ratio, so as thereby to cause the catalyst to supply an increased amount of reduction and deoxidization material with which the NOx absorbent is promoted to release NOx emissions.

## Claims

1. An exhaust gas purifying system (100) of an engine (1) of a type which has a fuel injector (5) spraying fuel directly into an combustion chamber (4) of each of multiple cylinders (2) and is equipped with exhaust purification means (22) which is disposed in an exhaust gas passage (20) through which exhaust gas is discharged from the engine (1) and purifies exhaust gas at least while the exhaust gas is at a low level of oxygen concentration,
wherein fuel injection control means (35) dividing a given amount of fuel to be sprayed through said fuel injector (5) into at least two parts for split fuel injection are provided, **characterised in that** said amount of fuel is sprayed between the beginning of an intake stroke and an end of a first half of a compression stroke following said intake stroke while exhaust gas is at said low level of oxygen concentration.

2. The exhaust gas purifying system (100) as defined in claim 1, wherein said engine (1) is a direct injection-spark ignition type of diesel engine, **characterized by**:
said exhaust purification means (22) comprising a NOx absorbent which absorbs NOx emissions in a high oxygen level of exhaust gas which contains oxygen in excess and releases absorbed NOx emissions in response to a decrease in oxygen concentration of the exhaust gas, and said fuel injection control means (35) causing said split fuel injection between the beginning of an intake stroke and the top dead center of a compression stroke following said intake stroke.

3. The exhaust gas purifying system (100) as defined in claim 1, and further **characterized by**:
air-to-fuel control means (35) for controlling an air-to-fuel ratio in said combustion chamber to converge at a stoichiometric air-to-fuel ratio, and said fuel injection control means causing said split fuel injection while said air-to-fuel control means (35) controls an air-to-fuel ratio in said combustion chamber to converge at said stoichiometric air-to-fuel ratio.

4. The exhaust gas purifying system (100) as defined in claim 2 or 3, and further
**characterized by**:
said fuel injection control means (35) dividing said amount of fuel into two parts for primary fuel injection which is caused near the top dead center of a compression stroke and secondary fuel injection which is caused between the beginning of an intake stroke prior to said compression stroke and an end of a first half of said compression stroke.

5. The exhaust gas purifying system (100) as defined in claim 4, **characterized by**:
an amount of fuel that is sprayed through said fuel injector (5) through said secondary fuel injection being between 8 and 23 % of an amount of fuel that is sprayed through said fuel injector (5) through said primary fuel injection.

6. The exhaust gas purifying system (100) as defined in claim 4, **characterized by**:
said secondary fuel injection being caused after an exhaust valve of each said cylinder (2) has been closed in said intake stroke.

7. The exhaust gas purifying system (100) as defined in claim 3, **characterized by**:
said air-to-fuel control means (35) controlling an air-to-fuel ratio in said combustion chamber (4) to converge at approximately said air-to-fuel ratio.

8. The exhaust gas purifying system (100) as defined in claim 1, wherein said engine (1) is a direct injection-spark ignition type of diesel engine, **characterized by**:.
said exhaust purification means (22) comprising a NOx absorbent which absorbs NOx emissions in a high oxygen level of exhaust gas which contains oxygen in excess and releases absorbed NOx emissions in response to a decrease in oxygen concentration of the exhaust gas,

9. The exhaust gas purifying system (100) as defined in claim 8, **characterized by**:
air-to-fuel control means (35) for controlling an air-to-fuel ratio in said combustion chamber (4) of a specified one of said multiple cylinders (2) to converge at an air-to-fuel ratio on a rich side which is approximately equal to or lower than said stoichiometric air-to-fuel ratio and said fuel injection control means (35) causing said split fuel injection in connection with said combustion chamber (4) of said specified cylinder.

10. The exhaust gas purifying system (100) as defined in claim 8 or 9, **characterized by**:
said fuel injection control means (35) dividing said amount of fuel into two parts for primary fuel injection which is caused near the top dead center of a compression stroke and secondary fuel injection which is caused between the beginning of an intake stroke prior to said compression stroke and an end of a first half of said compression stroke.

11. The exhaust gas purifying system (100) as defined in claim 10, **characterized by**:
said secondary fuel injection being caused at an crank angle between 10° and 20° after the top dead center of a compression stroke.

12. The exhaust gas purifying system (100) as defined in claim 10, **characterized by**:
said secondary fuel injection being caused at an crank angle between 15° and 25° after the top dead center of a compression stroke.

13. The exhaust gas purifying system (100) as defined in claim 10, **characterized by**:
said secondary fuel injection being caused at an crank angle between 15° and 25° after the top dead center of a compression stroke.

14. The exhaust gas purifying system (100) as defined in claim 10, **characterized by**:
an amount of fuel that is sprayed through said fuel injector (5) through said secondary fuel injection being between 30 and 50 % of an amount of fuel that is sprayed through said fuel injector (5) through said primary fuel injection.

15. The exhaust gas purifying system (100) as defined in any one of said preceding claims 11 - 14, **characterized by**:
said air-to-fuel control means (35) controlling an air-to-fuel ratio to converge at an air-to-fuel ratio on a rich side which is approximately equal to or lower than a stoichiometric air-to-fuel ratio.

16. The exhaust gas purifying system (100) as defined in any one of said preceding claims 3, 9 and 11 - 14, wherein said engine (1) is a diesel engine and equipped with an exhaust gas recirculation system (23, 24) which comprises an exhaust gas recirculation passage (23) through which exhaust gas is partly recirculated into said exhaust passage (20) and exhaust gas recirculation regulation means (24) for regulating an amount of exhaust gas that is recirculated through said exhaust gas recirculation passage (23), **characterized by**:
said air-to-fuel control means (35) switching an air-to-fuel ratio in said combustion chamber (4) between a rich side on which an air-to-fuel ratio is lower than a stoichiometric air-to-fuel ratio and a lean side on which an air-to-fuel ratio is higher than said stoichiometric air-to-fuel ratio and being equipped with exhaust gas recirculation control means (28, 29) for controlling said exhaust gas recirculation regulation means (24) so as to make an exhaust gas recirculation ratio of an amount of exhaust gas that is admitted into an intake air stream by said exhaust gas recirculation system (23, 24) relative to a total amount of intake air that is introduced into said engine (1) greater when said air-to-fuel ratio control means (35) controls an air-to-fuel ratio in said combustion chamber to be on said rich side than when said air-to-fuel ratio control means (35) controls said air-to-fuel ratio in said combustion chamber to be on said lean side.

17. The exhaust gas purifying system (100) as defined in claim 3 or 9, wherein said engine is a diesel engine, **characterized by**:
intake throttle means (14) for regulating an amount of intake air introduced into said combustion chamber 4 and said air-to-fuel control means (35) switching an air-to-fuel ratio in said combustion chamber (4) between a rich side on which an air-to-fuel ratio is lower than a stoichiometric air-to-fuel ratio and a lean side on which an air-to-fuel ratio is higher than said stoichiometric air-to-fuel ratio and being equipped with intake air control means (15, 16, 29) for controlling said intake throttle means (14) so as to make an amount of intake air that is admitted into an intake passage 10 smaller when said air-to-fuel ratio control means (35) controls an air-to-fuel ratio in said combustion chamber to be on said rich side than when said air-to-fuel ratio control means (35) controls said air-to-fuel ratio in said combustion chamber to be on said lean side.

18. The exhaust gas purifying system (100) as defined in claim 4 or 10, wherein said engine is a diesel engine, **characterized by**:
said fuel injection control means (35) advancing a timing at which said secondary fuel injection is made more as an engine load increases.

19. The exhaust gas purifying system (100) as defined in claim 4 or 10, wherein said engine is a diesel engine, **characterized by**:
said fuel injection control means changing a ratio of an amount of fuel that is sprayed through said fuel injector (5) through said secondary fuel injection relative to an amount of fuel that is sprayed through said fuel injector (5) through said primary fuel injection to be lower as an engine load decreases.

20. The exhaust gas purifying system (100) as defined in claim 1, wherein said engine is a diesel engine, **characterized by**:
said fuel injection control means (35) dividing said amount of fuel to be sprayed through said fuel injector (5) into at least two parts for primary fuel injection which is made near the top dead center of a compression stroke of a specified cylinder (2) and secondary fuel injection which is made between the beginning of an intake stroke prior to said compression stroke and an end of a first half of said compression stroke so as to converge an oxygen concentration of exhaust gas at less than 4 %.

21. The exhaust gas purifying system (100) as defined in claim 1, wherein said engine is a diesel engine, **characterized by**:
said fuel injection control means (35) dividing an amount of fuel to be sprayed through said fuel injector (5) into at least two parts for primary fuel injection which is made near the top dead center of a compression stroke of a specified cylinder (2) and secondary fuel injection which is made between commencement of said primary fuel injection and an end of a first half of said compression stroke so as to converge an oxygen concentration of exhaust gas at less than 4 %.

22. The exhaust gas purifying system (100) as defined in claim 1, **characterized by**:
an engine load sensor (32) operative to detect an engine load with which said engine (1) is operating and said fuel injection control means (35) dividing said amount of fuel to be sprayed through said fuel injector (5) into at least two parts for primary fuel injection which is caused near the top dead center of a compression stroke of a specified cylinder (2) and secondary fuel injection which is caused between the beginning of an intake stroke prior to said compression stroke and an end of a first half of said compression stroke such that a ratio of an amount of fuel that is sprayed through said fuel injector (5) through said secondary fuel injection relative to said amount of fuel to be sprayed through said fuel injector (5) becomes lower as said engine load increases.

23. The exhaust gas purifying system (100) as defined in claim 22, **characterized by**:
said secondary fuel injection being made either between the beginning of an intake stroke and an end of a first half of a compression stroke following said intake stroke or between completion of primary fuel injection and an end of a first half of a compression stroke following said intake stroke.

## Patentansprüche

1. Abgasreinigungssystem (100) einer Brennkraftmaschine (1) eines Typs, welcher eine Kraftstoffeinspritzvorrichtung (5) aufweist, welche Kraftstoff direkt in eine Verbrennungskammer (4) von jedem von mehreren Zylindern (2) einspritzt, und mit Abgasreinigungsmitteln bzw. -einrichtungen (22) ausgerüstet bzw. ausgestattet ist, welche in einem Abgasdurchtritt (20) angeordnet sind, durch welche Abgas von dem Motor bzw. der Brennkraftmaschine (1) ausgebracht wird, und Abgas wenigstens reinigt, während sich das Abgas auf einem geringen Niveau einer Sauerstoffkonzentration befindet,
worin Kraftstoffeinspritzungs-Regel- bzw. -Steuermittel bzw. -einrichtungen (35), welche eine vorgegebene Menge eines durch die Kraftstoffeinspritzvorrichtung (5) einzuspritzenden Kraftstoffes in wenigstens zwei Teile für eine unterteilte Kraftstoffeinspritzung unterteilen, vorgesehen sind, **dadurch gekennzeichnet, daß** die Kraftstoffmenge zwischen dem Beginn eines Ansaug- bzw. Einlaßhubes und einem Ende einer ersten Hälfte eines Verdichtungs- bzw. Kompressionshubes nachfolgend auf den Einlaßhub eingespritzt wird, während sich Abgas auf dem geringen Niveau einer Sauerstoffkonzentration befindet.

2. Abgasreinigungssystem (100) nach Anspruch 1, worin der Motor bzw. die Brennkraftmaschine (1) ein Direkteinspritzungs-Fremd- bzw. - Funkenzündungstyp eines Dieselmotors ist, **gekennzeichnet dadurch:**
**daß** die Abgasreinigungsmittel (22) ein NOx-Absorptionsmittel umfassen, welches NOx-Emissionen in einem hohen Sauerstoffniveau von Abgas absorbiert, welches Sauerstoff im Überschuß enthält und absorbierte NOx-Emissionen in Antwort auf eine Abnahme in der Sauerstoffkonzentration des Abgases abgibt bzw. freisetzt, und die Kraftstoffeinspritzungs-Steuermittel (35) die unterteilte Kraftstoffeinspritzung zwischen dem Beginn eines Einlaßhubes und dem oberen Totpunkt eines Kompressionshubes folgend auf den Einlaßhub bewirken.

3. Abgasreinigungssystem (100) nach Anspruch 1 und weiter **gekennzeichnet durch**:
Luft-Kraftstoff-Steuer- bzw. -Regelmittel (35) zum Regeln bzw. Steuern, daß sich ein Luft-Kraftstoff-Verhältnis in der Verbrennungskammer einem stöchiometrischen Luft-Kraftstoff-Verhältnis annähert bzw. zu diesem konvergiert, und die Kraftstoffeinspritzungs-Steuermittel, welche die unterteilte Kraftstoffeinspritzung bewirken, während die Luft-Kraftstoff-Steuermittel (35) ein Luft-Kraftstoff-Verhältnis regeln bzw. steuern, daß es sich in der Verbrennungskammer dem stöchiometrischen Luft-Kraftstoff-Verhältnis annähert bzw. zu diesem konvergiert.

4. Abgasreinigungssystem (100) nach Anspruch 2 oder 3 und weiters **gekennzeichnet durch**:
die Kraftstoffeinspritzungs-Steuermittel (35), welche die Menge an Kraftstoff in zwei Teile für eine primäre bzw. erste Kraftstoffeinspritzung, welche nahe dem oberen Totpunkt eines Kompressionshubes bewirkt wird, und eine sekundäre bzw. zweite Kraftstoffeinspritzung unterteilen, welche zwischen dem Beginn eines Einlaßhubes vor dem Kompressionshub und einem Ende einer ersten Hälfte des Kompressionshubes bewirkt wird.

5. Abgasreinigungssystem (100) nach Anspruch 4, **gekennzeichnet dadurch:**
**daß** eine Kraftstoffmenge, welche durch die Kraftstoffeinspritzeinrichtung (5) durch die sekundäre Kraftstoffeinspritzung eingespritzt wird, zwischen 8 und 23 % einer Kraftstoffmenge beträgt, welche durch die Kraftstoffeinspritzeinrichtung (5) durch die primäre Kraftstoffeinspritzung eingespritzt wird.

6. Abgasreinigungssystem (100) nach Anspruch 4, **gekennzeichnet dadurch:**
**daß** die sekundäre Kraftstoffeinspritzung bewirkt wird, nachdem ein Abgas- bzw. Auslaßventil des Zylinders (2) in dem Einlaßhub geschlossen wurde.

7. Abgasreinigungssystem (100) nach Anspruch 3, **gekennzeichnet dadurch:**
**daß** die Luft-Kraftstoff-Steuermittel (35) ein Luft-Kraftstoff-Verhältnis in der Verbrennungskammer (4) regeln bzw. steuern, daß es sich ungefähr dem Luft-Kraftstoff-Verhältnis annähert bzw. zu diesem konvergiert.

8. Abgasreinigungssystem (100) nach Anspruch 1, worin der Motor (1) ein Direkteinspritzungs-Funkenzündungstyp eines Dieselmotors ist, **gekennzeichnet dadurch:**
**daß** die Abgasreinigungsmittel (22) ein NOx-Absorptionsmittel umfassen, welches NOx-Emissionen in einem hohen Sauerstoffniveau von Abgas absorbiert, weiches jauerstoff im Überschuß enthält und absorbierte NOx-Emissionen in Antwort auf eine Abnahme in der Sauerstoffkonzentration des Abgases abgibt bzw. freisetzt.

9. Abgasreinigungssystem (100) nach Anspruch 8, **gekennzeichnet durch**:
Luft-Kraftstoff-Steuermittel (35) zum Regeln bzw. Steuern, daß sich ein Luft-Kraftstoff-Verhältnis in der Verbrennungskammer (4) eines bestimmten der mehreren Zylinder (2) einem Luft-Kraftstoff-Verhältnis auf einer angereicherten bzw. fetten Seite annähert bzw. konvergiert, welches gleich dem oder geringer als das stöchiometrische Luft-Kraftstoff-Verhältnis ist, und die Kraftstoffeinspritz-Steuermittel (35), welche die unterteilte Kraftstoffeinspritzung in Verbindung mit der Verbrennungskammer (4) des bestimmten Zylinders bewirken.

10. Abgasreinigungssystem (100) nach Anspruch 8 oder 9, **gekennzeichnet durch**:
die Kraftstoffeinspritzungs-Steuermittel (35), welche die Menge an Kraftstoff in zwei Teile für eine primäre bzw. erste Kraftstoffeinspritzung, welche nahe dem oberen Totpunkt eines Kompressionshubes bewirkt wird, und eine sekundäre bzw. zweite Kraftstoffeinspritzung unterteilen, welche zwischen dem Beginn eines Einlaßhubes vor dem Kompressionshub und einem Ende einer ersten Hälfte des Kompressionshubes bewirkt wird.

11. Abgasreinigungssystem (100) nach Anspruch 10, **gekennzeichnet dadurch:**
**daß** die sekundäre Kraftstoffeinspritzung bei einem Kurbelwellenwinkel zwischen 10° und 20° nach dem oberen Totpunkt eines Kompressionshubes bewirkt wird.

12. Abgasreinigungssystem (100) nach Anspruch 10, **gekennzeichnet dadurch:**
**daß** die sekundäre Kraftstoffeinspritzung bei einem Kurbelwellenwinkel zwischen 15° und 25° nach dem oberen Totpunkt eines Kompressionshubes bewirkt wird.

13. Abgasreinigungssystem (100) nach Anspruch 10, **gekennzeichnet dadurch:**
**daß** die sekundäre Kraftstoffeinspritzung bei einem Kurbelwellenwinkel zwischen 15° und 25° nach dem oberen Totpunkt eines Kompressionshubes bewirkt wird.

14. Abgasreinigungssystem (100) nach Anspruch 10, **gekennzeichnet dadurch:**
**daß** eine Kraftstoffmenge, welche durch die Kraftstoffeinspritzeinrichtung (5) durch die sekundäre Kraftstoffeinspritzung eingespritzt wird, zwischen 30 und 50 % einer Kraftstoffmenge beträgt, welche durch die Kraftstoffeinspritzeinrichtung (5) durch die primäre Kraftstoffeinspritzung eingespritzt wird.

15. Abgasreinigungssystem (100) nach einem der vorhergehenden Ansprüche 11 bis 14, **gekennzeichnet durch**:
die Luft-Kraftstoff-Steuermittel (35), welche ein Luft-Kraftstoff-Verhältnis regeln bzw. steuern, daß es sich einem Luft-Kraftstoff-Verhältnis auf einer angereicherten Seite annähert, welches ungefähr gleich einem oder geringer als ein stöchiometrisches Luft-Kraftstoff-Verhältnis ist.

16. Abgasreinigungssystem (100) nach einem der vorhergehenden Ansprüche 3, 9 und 11 bis 14, worin die Brennkraftmaschine (1) ein Dieselmotor ist und mit einem Abgasrezirkulationssystem (23, 24) ausgerüstet bzw. ausgestattet ist, welches einen Abgasrezirkulationsdurchtritt (23), durch welchen Abgas teilweise in den Abgasdurchtritt (20) rezirkuliert wird, und Abgasrezirkulations-Regulationsmittel bzw. -einrichtungen (24) zum Regeln einer Menge von Abgas umfaßt, welche durch den Abgasrezirkulationsdurchtritt (23) rezirkuliert wird, **gekennzeichnet dadurch:**
**daß** die Luft-Kraftstoff-Steuermittel (35) ein Luft-Kraftstoff-Verhältnis in der Verbrennungskammer (4) zwischen einer fetten bzw. angereicherten Seite, auf welcher ein Luft-Kraftstoff-Verhältnis geringer als ein stöchiometrisches Luft-Kraftstoff-Verhältnis ist, und einer mageren Seite umschaltet, auf welcher ein Luft-Kraftstoff-Verhältnis höher als das stöchiometrische Luft-Kraftstoff-Verhältnis ist, und mit Abgasrezirkulations-Steuermitteln bzw. -einrichtungen (28, 29) zum Regeln bzw. Steuern der Abgasrezirkulations-Regulationsmittel (24) ausgerüstet ist, um ein Abgasrezirkulationsverhältnis einer Menge von Abgas, welches in einen Einlaßluftstrom durch das Abgasrezirkulationssystem (23, 24) zugelassen wird, relativ zu einer Gesamtmenge an Ansaug- bzw. Einlaßluft, welche in die Brennkraftmaschine (1) eingebracht wird, größer zu machen, wenn die Luft-Kraftstoff-Verhältnis-Steuermittel (35) ein Luft-Kraftstoff-Verhältnis in der Verbrennungskammer regeln bzw. steuern, um auf der angereicherten Seite zu sein, als wenn die Luft-Kraftstoff-Verhältnis-Steuermittel (35) das Luft-Kraftstoff-Verhältnis in der Verbrennungskammer steuern bzw. regeln, daß es sich auf der mageren Seite befindet.

17. Abgasreinigungssystem (100) nach Anspruch 3 oder 9, worin die Brennkraftmaschine ein Dieselmotor ist, **gekennzeichnet durch**:
Ansaug- bzw. Einlaßdrosselmittel bzw. -einrichtungen (14) zum Regulieren einer Menge an Einlaßluft, welche in die Verbrennungskammer (4) eingebracht wird, und die Luft-Kraftstoff-Steuermittel (35) zum Umschalten eines Luft-Kraftstoff-Verhältnisses in der Verbrennungskammer (4) zwischen einer reichen bzw. angereicherten Seite, an welcher ein Luft-Kraftstoff-Verhältnis geringer als ein stöchiometrisches Luft-Kraftstoff-Verhältnis ist, und einer mageren Seite, an welcher ein Luft-Kraftstoff-Verhältnis höher als das stöchiometrische Luft-Kraftstoff-Verhältnis ist, und welche mit Einlaßluft-Steuermitteln (15, 16, 29) zum Regeln bzw. Steuern der Einlaßdrosselmittel (14) ausgerüstet ist, um eine Menge an Einlaßluft, welche in einen Einlaßdurchtritt (10) eingelassen wird, geringer zu machen, wenn die Luft-Kraftstoff-Verhältnis-Steuermittel (35) ein Luft-Kraftstoff-Verhältnis in der Verbrennungskammer regeln bzw. steuern, daß es sich auf der angereicherten Seite befindet, als wenn die Luft-Kraftstoff-Verhältnis-Steuermittel (35) das Luft-Kraftstoff-Verhältnis in der Verbrennungskammer steuern bzw. regeln, daß es sich auf der mageren Seite befindet.

18. Abgasreinigungssystem (100) nach Anspruch 4 oder 10, worin der Motor ein Dieselmotor ist, **gekennzeichnet dadurch:**
**daß** die Kraftstoffeinspritzungs-Steuermittel (35) einen Zeitpunkt, bei welchem die sekundäre Kraftstoffeinspritzung durchgeführt wird, weiter vorverlegen, wenn eine Motoriast ansteigt.

19. Abgasreinigungssystem (100) nach Anspruch 4 oder 10, worin der Motor ein Dieselmotor ist, **gekennzeichnet dadurch:**
**daß** die Kraftstoffeinspritzungs-Steuermittel ein Verhältnis einer Kraftstoffmenge, welche durch die Kraftstoffeinspritzeinrichtung (5) durch die sekundäre Kraftstoffeinspritzung eingespritzt wird, relativ zu einer Menge an Kraftstoff, welche durch die Kraftstoffeinspritzeinrichtung (5) durch die primäre Kraftstoffeinspritzung eingespritzt wird, ändern, daß sie geringer ist, wenn eine Motorlast abnimmt.

20. Abgasreinigungssystem (100) nach Anspruch 1, worin der Motor ein Dieselmotor ist, **gekennzeichnet dadurch:**
**daß** die Kraftstoffeinspritzungs-Steuermittel (35) die Kraftstoffmenge, welche durch die Kraftstoffeinspritzeinrichtung (5) einzuspritzen ist, für in wenigstens zwei Teile für eine primäre Kraftstoffeinspritzung, welche nahe dem oberen Totpunkt eines Kompressionshubes eines bestimmten Zylinders (2) durchgeführt wird, und eine sekundäre Kraftstoffeinspritzung unterteilen, welche zwischen dem Beginn eines Einlaßhubes vor dem Kompressionshub und einem Ende einer ersten Hälfte des Kompressionshubes durchgeführt wird, so daß sich eine Sauerstoffkonzentration des Abgases bei geringer als 4 % annähert bzw. konvergiert.

21. Abgasreinigungssystem (100) nach Anspruch 1, worin der Motor ein Dieselmotor ist, **gekennzeichnet dadurch:**
**daß** die Kraftstoffeinspritzungs-Steuermittel (35) eine Kraftstoffmenge, welche durch die Kraftstoffeinspritzeinrichtung (5) einzuspritzen ist, in wenigstens zwei Teile für eine primäre bzw. erste Kraftstoffeinspritzung, welche nahe dem oberen Totpunkt eines Kompressionshubes eines bestimmten Zylinders (2) durchgeführt wird, und eine sekundäre bzw. zweite Kraftstoffeinspritzung unterteilen, welche zwischen einem Beginn der primären Kraftstoffeinspritzung und einem Ende einer ersten Hälfte des Kompressionshubes durchgeführt wird, so daß sich eine Sauerstoffkonzentration des Abgases bei geringer als 4 % annähert bzw. konvergiert.

22. Abgasreinigungssystem (100) nach Anspruch 1, **gekennzeichnet durch**:
einen Motorlastsensor (32), welcher arbeitet, um eine Motorlast zu detektieren, mit welcher der Motor bzw. die Brennkraftmaschine (1) arbeitet, und die Kraftstoffeinspritzungs-Steuermittel (35), welche die Kraftstoffmenge, welche **durch** die Kraftstoffeinspritzeinrichtung (5) einzuspritzen ist, in wenigstens zwei Teile für eine primäre bzw. erste Kraftstoffeinspritzung, welche nahe dem oberen Totpunkt eines Kompressionshubes eines bestimmten Zylinders (2) bewirkt wird, und eine sekundäre bzw. zweite Kraftstoffeinspritzung unterteilen, welche zwischen dem Beginn eines Einlaßhubes vor dem Kompressionshub und einem Ende einer ersten Hälfte des Kompressionshubes durchgeführt wird, so daß ein Verhältnis einer Kraftstoffmenge, welche **durch** die Kraftstoffeinspritzeinrichtung (5) **durch** die sekundäre Kraftstoffeinspritzung eingespritzt wird, relativ zu der Menge, welche **durch** Kraftstoffeinspritzeinrichtung (5) einzuspritzen ist, niedriger wird, wenn die Motorlast ansteigt.

23. Abgasreinigungssystem (100) nach Anspruch 22, **gekennzeichnet dadurch:**
**daß** die sekundäre Kraftstoffeinspritzung entweder zwischen dem Beginn eines Einlaßhubes und einem Ende einer ersten Hälfte eines Kompressionshubes folgend auf den Einlaßhub oder zwischen der Fertigstellung einer primären Kraftstoffeinspritzung und einem Ende einer ersten Hälfte eines Kompressionshubes folgend auf den Einlaßhub durchgeführt wird.

## Revendications

1. Système (100) de purification des gaz d'échappement d'un moteur (1) d'un type qui comporte un injecteur (5) de carburant pulvérisant un carburant directement dans une chambre (4) de combustion de chacun de cylindres multiples (2) et est équipé d'un moyen (22) de purification d'échappement qui est disposé dans un passage (20) de gaz d'échappement par lequel des gaz d'échappement sont déchargés du moteur (1) et qui purifie les gaz d'échappement au moins au moment où les gaz d'échappement ont un niveau bas de concentration d'oxygène,
dans lequel des moyens (35) de commande d'injection de carburant divisant une quantité donnée de carburant devant être pulvérisé par ledit injecteur (5) de carburant en au moins deux parties pour une injection de carburant divisée sont prévus, **caractérisé en ce que** ladite quantité de carburant est pulvérisée entre le commencement d'une course d'admission et la fin d'une première moitié d'une course de compression suivant ladite course d'admission tandis que les gaz d'échappement sont audit niveau bas de concentration d'oxygène.

2. Système (100) de purification de gaz d'échappement selon la revendication 1, dans lequel ledit moteur (1) est un moteur diesel du type à allumage par étincelle, à injection directe, **caractérisé en ce que** :
ledit moyen (22) de purification d'échappement comporte un absorbant de NOx qui absorbe les émissions de NOx à un niveau d'oxygène élevé des gaz d'échappement qui contiennent de l'oxygène excédentaire et libère les émissions de NOx absorbées en réponse à une diminution de la concentration d'oxygène des gaz d'échappement, et lesdits moyens (35) de commande d'injection de carburant provoquent ladite injection de carburant divisée entre le commencement d'une course d'admission et le point mort haut d'une course de compression suivant ladite course d'admission.

3. Système (100) de purification de gaz d'échappement selon la revendication 1, et **caractérisé en outre par** :
un moyen (35) de commande du rapport de l'air au carburant destiné à commander le rapport de l'air au carburant dans ladite chambre de combustion pour le faire converger sur un rapport stoechiométrique d'air au carburant, et lesdits moyens de commande d'injection de carburant provoquent ladite injection de carburant divisée tandis que lesdits moyens (35) de commande du rapport d'air au carburant commandent un rapport d'air au carburant dans ladite chambre de combustion afin de le faire converger sur ledit rapport stoechiométrique d'air au carburant.

4. Système (100) de purification de gaz d'échappement. selon la revendication 2 ou 3, et **caractérisé en outre en ce que** :
lesdits moyens (35) de commande d'injection de carburant divisent ladite quantité de carburant en deux parties pour une injection de carburant primaire qui est provoquée à proximité du point mort haut d'une course de compression et une injection de carburant secondaire qui est provoquée entre le commencement d'une course d'admission avant ladite course de compression et la fin d'une première moitié de ladite course de compression.

5. Système (100) de purification de gaz d'échappement selon la revendication 4, **caractérisé en ce que** :
une quantité de carburant qui est pulvérisée par ledit injecteur (5) de carburant lors de ladite injection de carburant secondaire est comprise entre 8 et 23% d'une quantité de carburant qui est pulvérisée par ledit injecteur (5) de carburant pendant ladite injection de carburant primaire.

6. Système (100) de purification de gaz d'échappement selon la revendication 4, **caractérisé en ce que** :
ladite injection de carburant secondaire est provoquée après qu'une soupape d'échappement de chacun desdits cylindres (2) a été fermée dans ladite course d'admission.

7. Système (100) de purification de gaz d'échappement selon la revendication 3, **caractérisé en ce que** :
ledit moyen (35) de commande du rapport d'air au carburant commande un rapport d'air au carburant dans ladite chambre (4) de combustion afin de le faire converger approximativement sur ledit rapport de l'air au carburant.

8. Système (100) de purification de gaz d'échappement selon la revendication 1, dans lequel ledit moteur (1) est un moteur diesel du type à allumage par étincelle, à injection directe, **caractérisé en ce que** :
ledit moyen (22) de purification d'échappement comporte un absorbant de NOx qui absorbe des émissions de NOx à un niveau d'oxygène élevé des gaz d'échappement qui contiennent de l'oxygène excédentaire, et qui libère les émissions de NOx absorbées en réponse à une diminution de la concentration d'oxygène dans les gaz d'échappement.

9. Système (100) de purification de gaz d'échappement selon la revendication 8, **caractérisé en ce que** :
des moyens (35) de commande du rapport de l'air au carburant sont destinés à commander un rapport d'air au carburant dans ladite chambre de combustion (4) de l'un, spécifié, desdits cylindres multiples (2) afin de le faire converger sur un rapport d'air au carburant sur un côté riche qui est approximativement égal ou inférieur audit rapport stoechiométrique d'air au carburant et lesdits moyens (35) de commande d'injection de carburant provoquent ladite injection de carburant divisée en association avec ladite chambre de combustion (4) dudit cylindre spécifié.

10. Système (100) de purification de gaz d'échappement selon la revendication 8 ou 9, **caractérisé en ce que** :
lesdits moyens (35) de commande d'injection de carburant divisent ladite quantité de carburant en deux parties pour une injection de carburant primaire qui est provoquée à proximité du point mort haut d'une course de compression et une injection de carburant secondaire qui est provoquée entre le commencement d'une course d'admission avant ladite course de compression et la fin d'une première moitié de ladite course de compression.

11. Système (100) de purification de gaz d'échappement selon la revendication 10, **caractérisé en ce que** :
ladite injection de carburant secondaire est provoquée à un angle de vilebrequin compris entre 10° et 20° après le point mort haut d'une course de compression.

12. Système (100) de purification de gaz d'échappement selon la revendication 10, **caractérisé en ce que** :
ladite injection de carburant secondaire est provoquée à un angle de vilebrequin compris entre 15° et 25° après le point mort haut d'une course de compression.

13. Système (100) de purification de gaz d'échappement selon la revendication 10, **caractérisé en ce que** :
ladite injection de carburant secondaire est provoquée à un angle de vilebrequin compris entre 15° et 25° après le point mort haut d'une course de compression.

14. Système (100) de purification de gaz d'échappement selon la revendication 10, **caractérisé en ce que** :
une quantité de carburant qui est pulvérisée par ledit injecteur (5) de carburant pendant ladite injection de carburant secondaire est comprise entre 30 et 50% d'une quantité de carburant qui est pulvérisée par. ledit injecteur (5) de carburant pendant ladite injection de carburant primaire.

15. Système (100) de purification de gaz d'échappement selon l'une quelconque des revendications précédentes 11 à 14, **caractérisé en ce que** :
lesdits moyens (35) de commande de rapport d'air au carburant commandent un rapport d'air au carburant afin qu'il converge sur un rapport d'air au carburant sur un côté riche qui est approximativement égal ou inférieur à un rapport stoechiométrique d'air au carburant.

16. Système (100) de purification de gaz d'échappement selon l'une quelconque des revendications précédentes 3, 9 et 11 à 14, dans lequel ledit moteur (1) est un moteur diesel et est équipé d'un système (23, 24) de recyclage des gaz d'échappement qui comporte un passage (23) de recyclage des gaz d'échappement par lequel des gaz d'échappement sont partiellement recyclés dans ledit passage (20) des gaz d'échappement et un moyen (24) de régulation de recyclage des gaz d'échappement destiné à réguler une quantité de gaz d'échappement qui est recyclée par ledit passage (23) de recyclage de gaz d'échappement, **caractérisé en ce que** :
lesdits moyens (35) de commande de rapport d'air au carburant commutent un rapport d'air au carburant dans ladite chambre de combustion (4) entre un côté riche sur lequel un rapport d'air au carburant est inférieur à un rapport stoechiométrique d'air au carburant et un côté pauvre sur lequel un rapport d'air au carburant est supérieur audit rapport stoechiométrique d'air au carburant, et sont pourvus d'un moyen (28, 29) de commande de recyclage des gaz d'échappement destinés à commander ledit moyen (24) de régulation de recyclage des gaz d'échappement afin de rendre un rapport de recyclage des gaz d'échappement d'une quantité de gaz d'échappement qui est admise dans un courant d'air d'admission par ledit système (23, 24) de recyclage des gaz d'échappement par rapport à une quantité totale d'air d'admission qui est introduite dans ledit moteur (1) plus grand lorsque lesdits moyens (35) de commande du rapport d'air au carburant commandent un rapport d'air au carburant dans ladite chambre de combustion afin qu'il se trouve sur ledit côté riche que lorsque lesdits moyens (35) de commande du rapport d'air au carburant commandent ledit rapport d'air au carburant dans ladite chambre de combustion afin qu'il se trouve sur ledit côté pauvre.

17. Système (100) de purification de gaz d'échappement selon la revendication 3 ou 9, dans lequel ledit moteur est un moteur diesel, **caractérisé en ce que** :
des moyens (14) à papillon d'admission sont destinés à réguler une quantité d'air d'admission introduite dans ladite chambre (4) de combustion et lesdits moyens (35) de commande du rapport d'air au carburant commutent un rapport d'air au carburant dans ladite chambre de combustion (4) entre un côté riche sur lequel un rapport d'air au carburant est inférieur à un rapport stoechiométrique d'air au carburant et un côté pauvre sur lequel un rapport d'air au carburant est supérieur audit rapport stoechiométrique d'air au carburant, et sont équipés d'un moyen (15, 16, 29) de commande d'air d'admission destiné à commander ledit moyen (14) à papillon d'admission afin de rendre une quantité d'air d'admission qui est admise dans un passage (10) d'admission plus petit lorsque lesdits moyens (35) de commande du rapport d'air au carburant commandent un rapport d'air au carburant dans ladite chambre de combustion afin qu'il se trouve sur ledit côté riche que lorsque lesdits moyens (35) de commande du rapport d'air au carburant commandent ledit rapport d'air au carburant dans ladite chambre de combustion afin qu'il se trouve sur ledit côté pauvre.

18. Système (100) de purification de gaz d'échappement selon la revendication 4 ou 10, dans lequel ledit moteur est un moteur diesel, **caractérisé en ce que** :
lesdits moyens (35) de commande d'injection de carburant avancent davantage l'instant auquel ladite injection de carburant secondaire est effectuée lorsque la charge du moteur augmente.

19. Système (100) de purification de gaz d'échappement selon la revendication 4 ou 10, dans lequel ledit moteur est un moteur diesel, **caractérisé en ce que** :
lesdits moyens de commande d'injection de carburant modifient un rapport d'une quantité de carburant qui est pulvérisée par ledit injecteur (5) de carburant lors de ladite injection de carburant secondaire par rapport à une quantité de carburant qui est pulvérisée par ledit injecteur (5) de carburant lors de ladite injection de carburant primaire afin qu'il soit plus bas lorsque la charge du moteur diminue.

20. Système (100) de purification de gaz d'échappement selon la revendication 1, dans lequel ledit moteur est un moteur diesel, **caractérisé en ce que** :
lesdits moyens (35) de commande d'injection de carburant divisent ladite quantité de carburant devant être pulvérisée par ledit injecteur (5) de carburant en au moins deux parties pour une injection de carburant primaire qui est effectuée à proximité du point mort haut d'une course de compression d'un cylindre spécifié (2) et une injection de carburant secondaire qui est effectuée entre le commencement d'une course d'admission avant ladite course de compression et la fin d'une première moitié de ladite course de compression afin de faire converger une concentration d'oxygène des gaz d'échappement à moins de 4%.

21. Système (100) de purification de gaz d'échappement selon la revendication 1, dans lequel ledit moteur est un moteur diesel, **caractérisé en ce que** ;
lesdits moyens (35) de commande d'injection de carburant divisent une quantité de carburant devant être pulvérisée par ledit injecteur (5) de carburant en au moins deux parties pour une injection de carburant primaire qui est effectuée à proximité du point mort haut d'une course de compression d'un cylindre spécifié (2) et une injection de carburant secondaire qui est effectuée entre le commencement de ladite injection de carburant primaire et une fin d'une première moitié de ladite course de compression afin de faire converger une concentration d'oxygène des gaz d'échappement à moins de 4%.

22. Système (100) de purification de gaz d'échappement selon la revendication 1, **caractérisé en ce que** :
un capteur (32) de charge du moteur a pour effet de détecter une charge du moteur sous laquelle ledit moteur (1) fonctionne et lesdits moyens (35) de commande d'injection de carburant divisent ladite quantité de carburant devant être pulvérisée par ledit injecteur (5) de carburant en au moins deux parties pour une injection de carburant primaire qui est provoquée à proximité du point mort haut d'une course de compression d'un cylindre spécifié (2) et une injection de carburant secondaire qui est provoquée entre le commencement d'une course d'admission avant ladite course de compression et la fin d'une première moitié de ladite course de compression afin qu'un rapport d'une quantité de carburant qui est pulvérisée par ledit injecteur. (5) de carburant lors de ladite injection de carburant secondaire par rapport à ladite quantité de carburant devant être pulvérisée par ledit injecteur (5) de carburant diminue lorsque ladite charge du moteur augmente.

23. Système (100) de purification de gaz d'échappement selon la revendication 22, **caractérisé en ce que** :
ladite injection de carburant secondaire est effectuée soit entre le commencement d'une course d'admission et la fin d'une première moitié d'une course de compression suivant ladite course d'admission, soit entre l'achèvement d'une injection de carburant primaire et la fin d'une première moitié de la course de compression suivant ladite course d'admission.
